# FASCICULE DE BREVET EUROPEEN

(11) **EP 2 791 440 B1**
(45) Date de publication et mention de la délivrance du brevet: **24.05.2017**
(21) Numéro de dépôt: 12813917.7
(22) Date de dépôt: 13.12.2012
(51) Int. Cl.: E04F 13/08, E04B 1/76, E04B 1/80

(54) **SYSTÈME D'ISOLATION THERMIQUE AVEC APPUIS INTERMÉDIAIRES POUR MAINTENIR DES PANNEAUX PIV ET PROCÉDÉ D'ASSEMBLAGE ASSOCIÉ**
WÄRMEDÄMMUNGSSYSTEM MIT ZWISCHENLAGERN ZUM HALTEN VON VIP-PLATTEN UND ENTSPRECHENDES MONTAGEVERFAHREN
HEAT INSULATION SYSTEM WITH INTERMEDIATE BEARINGS FOR HOLDING VIP PANELS, AND RELATED ASSEMBLY METHOD

(30) Priorité: 14.12.2011 FR 1161647
(43) Date de publication de la demande: 22.10.2014
(73) Titulaire: Electricité de France, 75008 Paris (FR); Siniat, 84000 Avignon (FR)
(72) Inventeur: JALLON, Paul, F-33000 Bordeaux (FR); HOUVENAGHEL, Geert, F-27400 Heudreville Sur Eure (FR); BLANC, Christophe, F-30400 Villeneuve Les Avignon (FR); BOURBON, Lionel Brice, F-84510 Caumont Sur Durance (FR); MILLEVILLE, Pierre-Henri, F-77670 Vernou La Celle (FR); DUFORESTEL, Thierry, F-77250 Moret Sur Loing (FR); YRIEIX, Bernard, F-77250 Moret Sur Loing (FR); COLMET DAAGE, Mathilde, F-77300 Fontainebleau (FR)
(74) Mandataire: Cabinet Plasseraud
(86) Numéro de dépôt international: PCT/FR2012/052915
(87) Numéro de publication internationale: WO 2013/088075

(56) Documents cités:
- EP-A1- 0 564 375
- EP-A1- 0 854 245
- EP-A1- 1 288 590
- DE-U1-202011 005 374

## Description

La présente invention concerne, dans le domaine du bâtiment, les installations d'isolation thermique qui incorporent une couche isolante formée de panneaux élémentaires de type PIV (Panneau Isolant sous Vide) et au moins un parement typiquement rigide et sensiblement plan, par exemple une plaque de plâtre. L'invention concerne également un procédé de fabrication d'un tel système.

Les panneaux élémentaires de type PIV comprennent de façon connue en soi un matériau de coeur poreux isolant (par exemple) à structure micro-cellulaire ou nano-cellulaire à cellules ouvertes) maintenu sous vide par une enveloppe barrière garantissant l'étanchéité aux gaz. L'enveloppe barrière est souple et intègre généralement un film thermo-soudable. Ces panneaux forment des plaques d'épaisseur sensiblement constante et présentent de grandes tailles, par exemple 600 mm de largeur et 1200 mm de longueur (d'autres largeur, par exemple de 300 mm, 400, 500 jusqu'à à 1200 mm étant bien entendu disponibles, la longueur variant généralement entre 500 et 2000 mm). La taille de ces panneaux conviendrait donc pour le recouvrement de parois de bâtiments à des fins d'isolation thermique. De plus, la performance thermique de ces panneaux élémentaires conduit à des épaisseurs qui peuvent être réduites pour minimiser l'encombrement du système d'isolation thermique, l'épaisseur d'un panneau pouvant être inférieure à 60 mm, et de préférence inférieure à 35 mm.

Dans le domaine, on qualifie de super isolants thermiques des matériaux présentant, à température ambiante, un niveau de conductivité thermique inférieure à 25 mW m⁻¹ K⁻¹. Les panneaux PIV ont une conductivité thermique inférieure à 7 mW m⁻¹ K⁻¹, et plus préférentiellement inférieure à 5 mW m⁻¹ K⁻¹.

Dans les panneaux élémentaires de type PIV, tous les gaz présents sont évacués du matériau poreux super isolant avant un conditionnement sous vide au sein d'une enveloppe barrière souple généralement constitué (de façon connue en soi) d'un film thermo-soudable pouvant être métallisé qui permet en outre d'éviter la formation de ponts thermiques au niveau des tranches.

L'utilisation de tels panneaux élémentaires pour réaliser une installation d'isolation thermique présente cependant les inconvénients suivants :
- d'une part, l'enveloppe barrière très mince est fragile vis-à-vis de risques de perforations au contact de surfaces rigides ou à angles vifs,
- d'autre part, si le panneau sous vide réalisé avec cette enveloppe présente une bonne rigidité apparente, il ne tolère pas d'efforts de compression ou de flexion qui sont susceptibles d'allonger localement l'enveloppe et de dégrader ses propriétés de barrière aux gaz.

On connaît, par exemple par le document DE 102 25 167, un élément mural qui intègre une plaque isolante entre un parement externe et des supports en bois. Un espace est laissé libre entre la plaque isolante et le parement externe. Le maintien du parement externe est permis par utilisation d'éléments verticaux d'écartement qui prennent appui, directement ou indirectement sur la plaque isolante. On comprend que lorsqu'on souhaite intégrer dans ce type d'élément mural des panneaux PIV performants, du type utilisant une enveloppe barrière étanche, fermée sous vide, le risque de détériorer l'enveloppe est élevé, à cause de l'appui qui s'exerce sur les panneaux PIV. Même en ajoutant des couches protectrices, par exemple une mousse de polyuréthane, autour de l'enveloppe des panneaux, le risque de détérioration reste relativement élevé. Une solution proposée dans le document DE 102 25 167 pour mieux protéger la plaque isolante est d'utiliser non seulement la mousse protectrice autour des plaques isolantes, mais aussi des paires de profilés verticaux qui sont placés à l'avant et à l'arrière des bordures verticales des plaques isolantes. Ces profilés font alors la liaison entre les éléments verticaux d'écartement et les supports en bois. L'avantage de ce type de maintien de la plaque isolante est qu'on évite le contact avec une paroi du bâtiment.

Cependant, avec ce type d'élément mural, l'installation de la paire de profilés verticaux est délicate et l'emploi d'une couche protectrice additionnelle augmente le coût de la plaque isolante. On comprend ainsi que la pose de tels systèmes peut s'avérer complexe et donc relativement longue surtout lorsqu'il faut réaliser la pose avec des panneaux PIV de dimensions "standard" avec des parois, ce qui se traduit par des coûts de montage relativement élevés et un grand risque de perdre la performance thermique des panneaux PIV en détériorant leur enveloppe barrière (conduisant alors à la perte du vide et à la pénétration possible de vapeur d'eau dans le matériau poreux). La performance du panneau PIV est dans ce cas dégradée instantanément d'un facteur supérieur à trois ou quatre. Il faut aussi noter que ce type de pose ne prévoit pas de solution pour superposer des rangées de panneaux PIV et génère des discontinuités importantes dans la couche isolante qui dégrade les performances globales de l'élément mural.

Un élément mural est décrit dans le document EP 1 288 590, avec l'utilisation de profilés horizontaux et de profilé verticaux. Il aussi est connu du document DE 20 2011 005374 U1 un dispositif d'isolation thermique qui utilise un format de panneaux PIV spécifique et des éléments d'entretoisement qui traversent la couche de panneaux PIV sans les endommager.

Il existe donc un besoin pour des systèmes d'isolation thermique aisés à installer et qui permettent d'intégrer efficacement et de manière simple des panneaux élémentaires de type PIV, notamment pour des applications de contrecloison de grande surface dans un bâtiment.

La présente invention a notamment pour but de pallier tout ou partie des inconvénients précités.

A cet effet, il est proposé selon l'invention un système d'isolation thermique tel que défini dans la revendication 1.

Ainsi, les panneaux PIV sont maintenus devant la paroi à isoler par l'intermédiaire de dispositifs d'entretoisement qui sont entièrement distincts des panneaux, de sorte que la matière isolante reste parfaitement intègre lors du montage et lorsque des efforts s'exercent sur le parement externe, tout en rapprochant au maximum les panneaux PIV adjacents (la couche isolante est alors définie essentiellement par les panneaux PIV, les espaces intercalaires étant négligeables). On comprend que la charge à appliquer sur les panneaux peut être avantageusement réduite, et l'élément mural peut être construit avec une faible épaisseur, même avec une paroi de bâtiment ayant une surface très irrégulière.

En outre, le fait de prévoir des éléments d'entretoisement au niveau de la jonction entre coins des panneaux facilite les opérations de démontage qui peuvent être alors envisagés. On comprend que les panneaux élémentaires peuvent être récupérés le cas échéant après un tel démontage.

Dans divers modes de réalisation du système d'isolation thermique selon l'invention, on peut éventuellement avoir recours en outre à l'une et/ou à l'autre des dispositions suivantes :
- l'élément étoilé comprend quatre branches agencées pour former quatre angles de 90° autour de l'axe longitudinal, les panneaux ayant une forme rectangulaire avec quatre tranches et quatre coins, les moyens de maintien des coins des panneaux comprenant deux platines en vis-à-vis, chacune des platines s'étendant de façon annulaire autour de la portion centrale de l'élément étoilé (le maintien serré de quatre panneaux distincts dans la zone de jonction peut être réalisé à l'aide du serrage d'un minimum de pièces, par exemple deux pièces seulement lorsque l'une des platines est intégralement formée avec l'élément étoilé, ici cruciforme) ;
- les deux platines présentent chacune une face intérieure qui présente au moins quatre organes saillants élastiquement déformables répartis dans quatre zones angulaires complémentaires de la face intérieure et adaptés chacun pour venir en appui sur une face opposée d'un des panneaux, les organes saillants présentant une surface plane ou convexe pour le contact avec les panneaux (on minimise ainsi le risque de détérioration de l'enveloppe barrière du panneau PIV lors du montage du dispositif d'entretoisement) ;
- les dispositifs d'entretoisement comprennent chacun un élément de raccordement agencé à une deuxième extrémité axiale du dispositif d'entretoisement opposée à la première extrémité axiale, l'élément de raccordement étant fixé sur un élément d'appui des moyens structurels (on assure de la sorte une parfaite stabilité de la couche de panneaux PIV en minimisant le nombre d'éléments de l'ossature, les moyens structurels pouvant supporter directement le parement externe) ;
- les dispositifs d'entretoisement comprennent chacun une tige d'entretoisement fixée à l'élément étoilé et qui s'étend dans le prolongement de la portion centrale de l'élément étoilé, l'élément de raccordement se fixant à la tige (avec cette configuration, on peut ajuster l'écartement, ce qui est utile si on veut placer des gaines et des conduites de fluide derrière le parement externe ; on ajuste ainsi facilement l'espace formant lame d'air qui permet de protéger les panneaux par rapport aux opérations de perforations sur le parement externe) ;
- le système comprend une pluralité de profilés qui s'étendent de préférence parallèlement ou perpendiculairement aux rangées, les moyens structurels comprenant des premiers profilés de ladite pluralité qui présentent chacun une section en U en coupe transversale (le montage est facilité, avec la possibilité de rattraper des irrégularités du plancher ou du plafond) ;
- l'élément de raccordement est de type réglable et comprend un filetage interne coopérant avec un filetage externe de la tige d'entretoisement et au moins une structure d'accrochage sur deux retours parallèles des premiers profilés (ceci contribue à faciliter le montage et le réglage en profondeur des panneaux) ;
- les profilés comprennent aussi des deuxièmes profilés qui s'étendent perpendiculairement aux premiers profilés et en vis-à-vis de la face arrière de la couche de panneaux, l'élément support des dispositifs d'entretoisement étant fixé indirectement à la paroi par l'intermédiaire d'un de ces deuxièmes profilés (la fixation d'un profilé sur la paroi de façon horizontale permet d'ajuster en une seule fois le niveau de hauteur qui doit correspondre à une jonction entre deux rangées de panneaux) ;
- chacune des branches de l'élément étoilé a une épaisseur comprise entre 0,5 et 5 mm, de préférence inférieure à 3 mm, la portion centrale définissant entre deux branches opposées un écartement inférieur ou égal à 5 mm (avec cette disposition, les panneaux de la couche définissant une surface sensiblement égale à la totalité de la surface du système d'isolation et les effets de pont thermique sont minimisés) ;
- le dispositif d'entretoisement présente, au moins au niveau de l'élément étoilé, une conductivité thermique très inférieure à 0,6 W m⁻¹ K⁻¹, par exemple inférieure à 0,5 W m⁻¹ K⁻¹, et de préférence inférieure à 0,25 W m⁻¹ K⁻¹, la couche de panneaux présentant en outre entre chaque paire de panneaux adjacents des éléments d'étanchéité formant barrière à une circulation d'air au travers de la couche ; (avec cette disposition : pas de convection possible ni d'échange entre la lame d'air située à l'arrière de la couche de panneaux et la lame d'air formée le long de la face avant) ;
- le système comprend une couche de matériau protecteur, préférentiellement à base de fibres, qui s'étend du côté du parement externe et est adaptée pour prévenir une perforation des panneaux (couche protectrice particulièrement utile lorsque le parement externe est très rapproché des panneaux PIV).

Par ailleurs, l'invention a également pour objet un procédé d'assemblage d'un système d'isolation thermique recouvrant une paroi d'un bâtiment, dans lequel on fixe sur une ossature une pluralité de panneaux isolants ayant chacun une forme de plaque avec quatre côtés dont deux côtés opposés parallèles, chacun des panneaux de ladite pluralité comprenant un matériau poreux résistant à la compression et une enveloppe barrière étanche aux gaz permettant de maintenir un vide intérieur et qui renferme le matériau poreux, le procédé comprenant les étapes consistant essentiellement à :
- fixer des moyens structurels rigides en s'appuyant sur au moins un substrat du bâtiment, à distance de la paroi ;
- fixer à la paroi, directement ou indirectement, une pluralité d'éléments de support pour former des premières extrémités d'une même pluralité de dispositifs d'entretoisement de préférence non métalliques ;
- assembler lesdits panneaux de façon à former une couche de panneaux à une distance intermédiaire entre la paroi du bâtiment et les moyens structurels, en engageant des coins des panneaux entre deux branches adjacentes d'un élément étoilé qui fait partie des dispositifs d'entretoisement ;
- maintenir des coins des panneaux par un rapprochement de moyens de maintien répartis de part et d'autre des branches de l'élément étoilé ;
- utiliser les moyens structurels pour supporter tous ou une partie des dispositifs d'entretoisement à des deuxièmes extrémités opposées aux premières extrémités ; et
- fixer un parement externe parallèlement et à distance de la couche de panneaux, de façon à définir un espace entre le parement externe et ladite couche de panneaux.

Ainsi, le positionnement des panneaux dans une couche plane est aisé, par simple pose sur les branches correspondantes des dispositifs d'entretoisement qui font partie de l'ossature de l'élément mural. Les dispositifs d'entretoisement ont à la fois une fonction de maintien structurel et une fonction de reprise d'efforts d'appui exercés sur le parement externe du fait de leur raccordement avec les dispositifs d'appui rigides. On comprend que l'âme isolante reste avantageusement intègre lors du montage et lorsque des efforts s'exercent sur le parement externe, alors que les panneaux PIV sont très rapprochés les uns des autres (la couche isolante est alors définie essentiellement par les panneaux PIV, les espaces intercalaires qui correspondent à l'épaisseur de la base d'un profilé étant négligeables). De plus, l'élément mural peut être construit avec une faible épaisseur, même avec une paroi de bâtiment ayant une surface très irrégulière.

Selon une particularité, on fixe le parement externe et des deuxièmes extrémités des dispositifs d'entretoisement sur des profilés qui sont préférentiellement métalliques.

La description suivante se réfère à plusieurs modes de réalisation, donnés à titre d'exemples non limitatifs, en regard des dessins joints (sachant que les figures 1 à 7B ne concernent pas l'invention) dans lesquels :
- la figure 1 est une vue en perspective représentant une forme de réalisation particulière d'un système d'isolation thermique ;
- la figure 2 montre, selon une coupe horizontale, une variante de réalisation de la figure 1 au niveau d'un angle ;
- la figure 3A montre un détail de réalisation de la figure 1 au niveau de l'extrémité inférieure du système d'isolation thermique ;
- les figures 3B, 3C et 3D montrent respectivement des variantes du profilé montré sur la figure 3A pour l'insertion d'un panneau PIV ;
- la figure 4A montre une vue en coupe verticale d'un profilé pouvant être utilisé entre deux rangées de panneaux PIV ;
- la figure 4B montre une vue en coupe verticale d'un profilé pouvant être utilisé pour mettre en place l'avant-dernière et la dernière rangées de panneaux PIV ;
- les figures 5A et 6A sont respectivement des vues en coupe verticale de variantes du profilé de la figure 4A, de tels profilés pouvant être utilisés entre deux rangées de panneaux PIV ;
- les figures 5B et 6B sont respectivement des vues en coupe verticale de variantes du profilé de la figure 4B, de tels profilés pouvant être utilisés pour mettre en place l'avant-dernière et la dernière rangées de panneaux PIV ;
- les figures 7A et 7B sont des vues en coupe verticale qui illustrent le montage des panneaux PIV dans l'avant-dernière et la dernière rangées ;
- la figure 8A montre une vue en coupe verticale d'une forme de réalisation du système d'isolation thermique selon l'invention ;
- la figure 8B montre un détail de la figure 8A, illustrant un exemple de dispositif d'entretoisement pour le maintien des panneaux PIV ;
- la figure 9A est une vue en coupe transversale horizontale qui illustre la fixation d'une extrémité d'un dispositif d'entretoisement ;
- la figure 9B illustre schématiquement l'agencement d'un dispositif d'entretoisement à la jonction entre quatre panneaux PIV ;
- la figure 10 est une vue en perspective montrant une équerre d'angle utilisée pour le raccordement de deux couches de panneaux PIV agencés à sensiblement 90° ;
- la figure 11A est une vue de dessus d'un élément support formant une première extrémité axiale du dispositif d'entretoisement, selon une forme de réalisation particulière de l'invention ;
- la figure 11B est une vue de face de l'élément support de la figure 11A ;
- la figure 12 est une vue en perspective qui montre un élément support formant une extrémité axiale du dispositif d'entretoisement, selon une autre forme de réalisation particulière de l'invention ;
- la figure 13A est une vue de côté d'une tige d'entretoisement utilisée dans un dispositif d'entretoisement ;
- la figure 13B est une vue de côté d'un élément de raccordement formant une extrémité axiale d'un dispositif d'entretoisement selon une forme de réalisation particulière de l'invention ;
- la figure 14 montre un élément étoilé adapté pour s'intercaler entre les coins des panneaux PIV.

Sur les différentes figures, les mêmes références désignent des éléments identiques ou similaires.

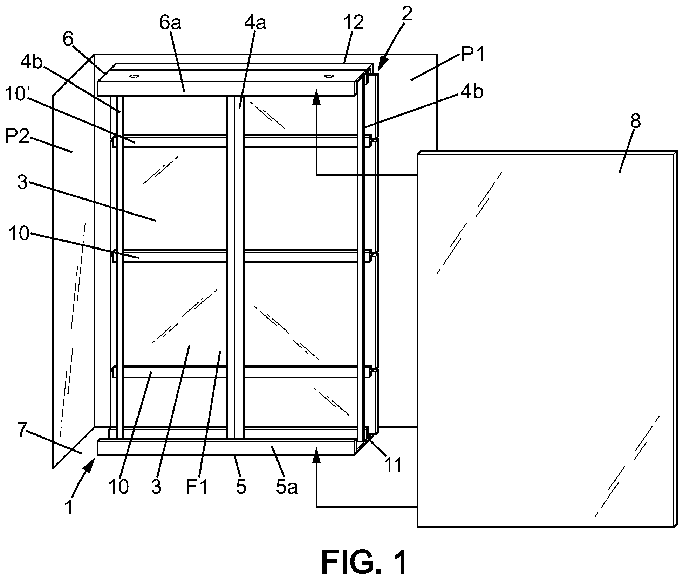

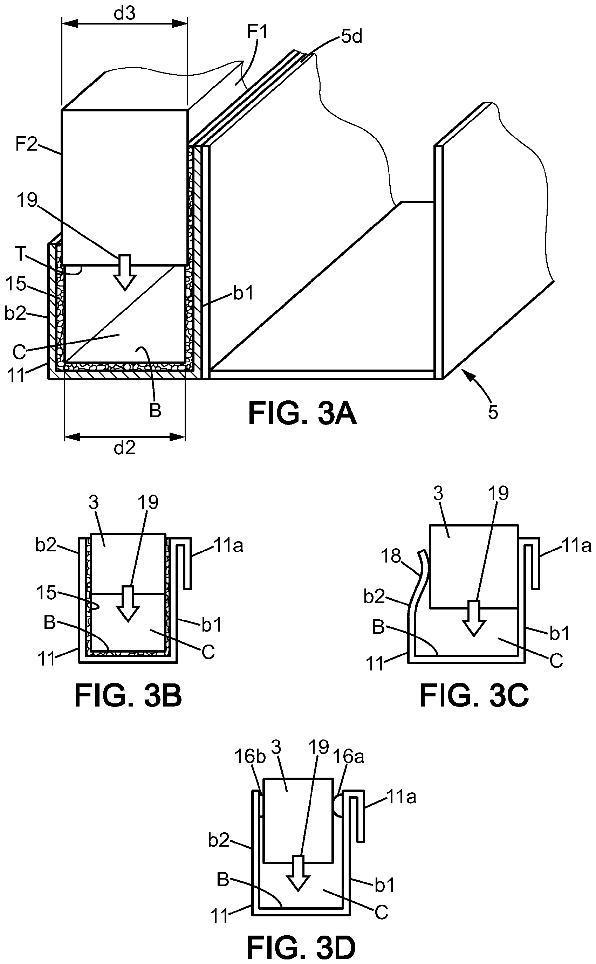

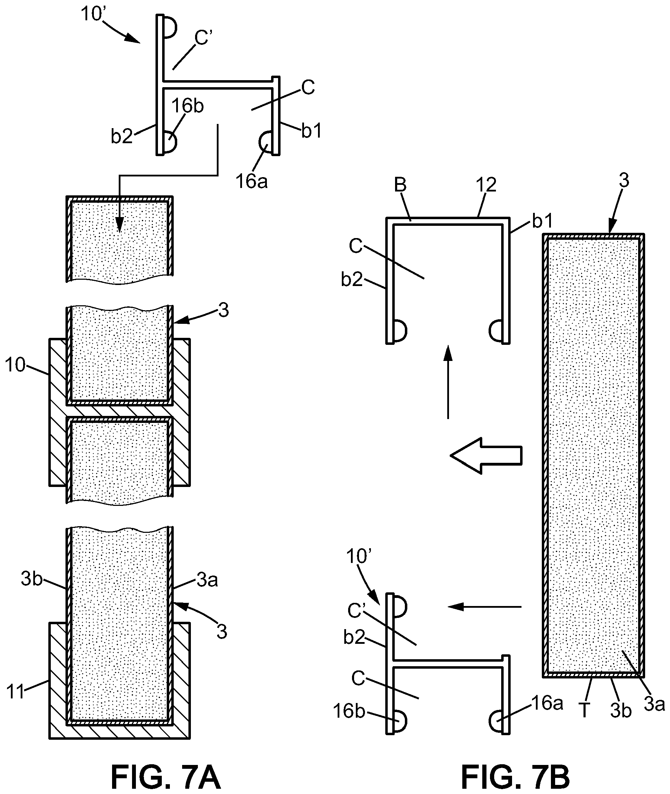

Un système d'isolation thermique 1 (n'illustrant pas l'invention) est bien visible sur la figure 1. Le système d'isolation thermique 1 présente une ossature 2 et plusieurs panneaux 3 de type PIV standards sans protection mécanique associée ayant chacun un format parallélépipédique avec la même épaisseur (cette épaisseur étant typiquement la plus petite des dimensions des panneaux 3). Les panneaux 3 sont montés sur l'ossature 2 et répartis dans une couche qui présente plusieurs rangées de panneaux 3 de même largeur. Cette couche présente une face avant F1 bien visible sur la figure 1 et une face arrière F2 (figure 3A) opposée à la face avant F1. De façon connue en soi et comme montré sur les figures 7A-7B, l'âme isolante 3a, poreuse, du panneau 3 est mise sous vide et enfermée dans l'enveloppe barrière étanche 3b qui est de préférence souple.

L'ossature 2 comprend ici :
- des dispositifs structurels rigides 4a, 4b, 5, 6 fixés directement ou indirectement sur au moins un substrat du bâtiment tel que par exemple un plancher 7 et un plafond (non représenté sur la figure 1), et agencés entre un parement externe 8 du système 1 et au moins une paroi P1, P2 du bâtiment ; et
- des profilés 10, 10', 11 et 12, ici agencés horizontalement, qui permettent de border deux côtés parallèles des panneaux 3 dans les rangées de panneaux 3 et qui présentent une rigidité suffisante pour résister à des efforts de torsion.

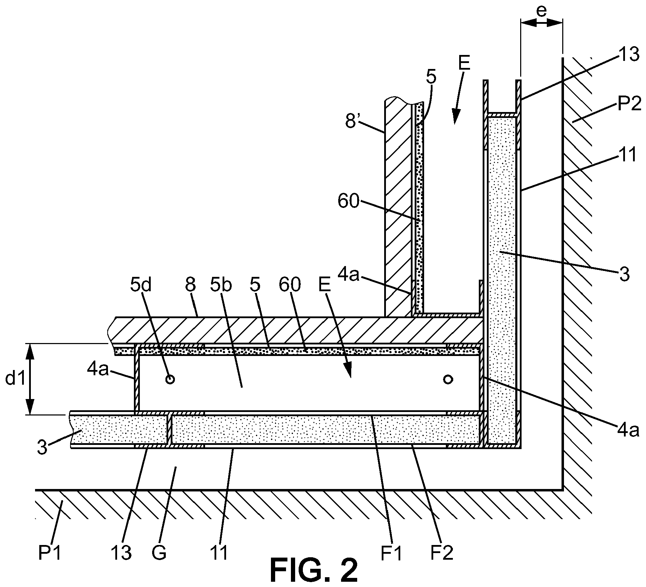

Dans l'exemple non limitatif de la figure 1, l'ossature 2 peut s'étendre à distance de la paroi P1 et de la paroi P2, aucune fixation sur ces parois P1, P2 n'étant requise. Les dispositifs structurels rigides 4a, 5, 6 sont ici des profilés, de préférence métalliques, ayant une section en U en coupe transversale (ou éventuellement en L pour le profilé 4a, comme visible sur la figure 2). Les profilés 4a s'étendent verticalement entre les profilés d'appui 5 du bas et les profilés d'appui 6 du haut de l'ossature 2 et s'étendent en profondeur entre le parement externe 8 et la couche de panneaux 3 de type PIV. Ce positionnement décalé vers l'avant par rapport à la couche de panneaux 3 est permis par l'agencement des profilés 5 et 6 qui forment des supports sensiblement horizontaux qui maintiennent la verticalité des profilés 4a ou d'autres éléments rigides analogues. Les profilés 5 et 6 dont la direction d'allongement est horizontale ont une forme de U qui permet de recevoir, entre les branches du U, les profilés 4a ou montants similaires dont la direction d'allongement est verticale. Ces montants sont par exemple espacés de 30 à 90 cm et forment ainsi un bon support de fixation du parement externe 8. La géométrie des profilés 4a, 5 et 6 dépend bien entendu de la distance d1 voulue entre le parement 8 et la couche de panneaux 3 de type PIV, et de la hauteur de l'ouvrage fini. Dans les profilés 4a, les branches ont par exemple une extension depuis la base comprise entre 30 mm et 90 mm, l'usage (en France) voulant qu'elle soit typiquement de 48 mm. Les profilés 4a, 5 et 6 de l'ossature 2 sont ici métalliques avec une épaisseur de 0,3 à 1 mm, préférentiellement d'environ 0,6 mm.

On peut voir sur les figures 1 et 3A que le profilé d'appui 5 est accolé contre la branche avant d'un profilé inférieur 11 qui délimite l'extrémité inférieure de la couche de panneaux 3. La figure 2 montre un raccordement (qui peut être de type conventionnel, par clipsage ou vissage notamment) entre un profilé 4a vertical et l'un des profilés d'appui 5 du bas de l'ossature 2. De manière similaire on peut voir sur la figure 1 que le profilé 5 est accolé contre la branche avant d'un profilé supérieur 12 qui délimite l'extrémité supérieure de la couche de panneaux 3. Des vis 5d visibles sur la figure 2 peuvent aussi servir à fixer ces profilés d'appui 5 au plancher 7. Une fixation analogue au plafond peut être utilisée pour les profilés d'appui 6.

Comme cela est bien visible sur la figure 1, les profilés d'appui 5, 6 forment deux faces d'appui 5a, 6a qui sont ici parallèles et situées aux extrémités opposées (haut et bas) de l'ossature 2, pour supporter le parement externe 8. Ces faces d'appui 5a, 6a supportent ici frontalement le parement externe 8 et présentent chacune une hauteur d'au moins 25 mm et de préférence d'au moins 35 mm. Les profilés d'appui 5, 6 peuvent être métalliques ou non métalliques et présentent de préférence une même largeur normalisée.

On comprend que la base 5b des profilés d'appui 5 et 6 s'étend ici parallèlement à la paroi P1, selon une même largeur que la largeur de la couche de panneaux 3. C'est la largeur de cette base 5b (qui se mesure perpendiculairement à la paroi P1) qui permet de définir un espace E entre le parement externe 8 et la face avant F1 de la couche de panneaux PIV. Autrement dit, les profilés 4a et les profilés d'appui 5 et 6 peuvent présenter une fonction d'entretoisement (avec les bases respectives 5b et 6b) sans contact avec les panneaux PIV 3, et former des appuis intermédiaires pour le parement externe 8.

Bien entendu, des éléments rigides ayant une section différente d'un U peuvent être utilisés, par exemple des barres métalliques 4b ou montants analogues en complément ou en remplacement des profilés 4a. Ces éléments rigides s'étendent entre les profilés d'appui 5 du bas et les profilés d'appui 6 du haut de l'ossature 2 et renforcent ainsi le système d'isolation thermique 1. Par ailleurs, il peut être prévu d'utiliser une seule pièce ayant une section transversale en W pour remplacer les profilés 5 et 11 d'une part, et 6 et 12 d'autre part. Comme cela est visible sur la figure 2, on peut aussi prévoir d'utiliser des profilés 4a ayant en coupe transversale une forme de L qui s'appuie sur des profilés en H agencés entre deux panneaux 3 adjacents d'une même rangée.

L'espace libre E entre le parement externe 8 et la face avant F1 de la couche de panneaux 3 présente une profondeur d1 qui peut être légèrement supérieure ou égale à la largeur des profilés 4a. On comprend qu'un tel espace E protège les panneaux 3 d'un organe qui traverserait l'épaisseur du parement externe, en particulier lorsque cette profondeur d1 est de l'ordre de 20 ou 30 mm par exemple. L'épaisseur totale du système d'isolation thermique 1 peut être très inférieure à 150 mm, et de préférence inférieure ou égale à 50 mm. Pour cela l'épaisseur des panneaux 3 peut être choisie inférieure ou égale à 25 mm et la profondeur d1 inférieure ou égale à 25 mm. La distance entre la paroi P1 et la couche de panneaux 3 est par ailleurs minimisée dans des formes de réalisation préférées, et représente par exemple moins de 20 mm.

Cet espace E permet la mise en place d'une couche 60 de matériau anti-perforation à partir de la face de parement 8, rigide ou de préférence à base de fibres ou tissu textile ou similaire et d'épaisseur inférieure à l'épaisseur des panneaux 3 de type PIV. Cette disposition permet de conserver l'intégrité de l'enveloppe 3b des panneaux 3 isolants sous vide lors d'interventions par perçage vissage, fixation d'éléments ou opération similaire sur le parement externe 8, en particulier lorsque le parement externe 8 est proche de la couche de panneaux 3.

En référence aux figures 1 et 2, il est prévu ici d'utiliser trois types de profilés 10, 10' et 11-12 horizontaux pour le maintien des panneaux 3 dans une couche verticale. Un quatrième type de profilés 13, verticaux, est optionnellement utilisé pour former une jonction entre les panneaux PIV d'une même rangée. Ces profilés 13 présentent une section en H en coupe horizontale. Ils sont par exemple découpés à façon et positionnés pour venir en contact contre deux tranches verticales de panneaux 3 voisins dans une rangée. La dimension verticale de ces profilés 13 est plus faible que celle des panneaux 3 de la rangée correspondante pour permettre leur mise en place dans le prolongement vertical des profilés horizontaux 10, 10', 11 ou 12 utilisés pour le maintien de la rangée concernée.

Parmi les trois types de profilés horizontaux 10, 10', 11 et 12 intégrés dans la couche et venant en contact direct avec les panneaux 3, on peut distinguer :
- un profilé 11 ou 12 en U pouvant se fixer par clipsage sur les bords verticaux du profilé d'appui 5 fixé au plancher 7 ou du profilé d'appui 6 fixé au plafond ;
- un profilé intermédiaire 10 en H qui s'étend horizontalement entre au moins deux panneaux PIV de rangées adjacentes ;
- un profilé intermédiaire 10' pour la mise en place de la dernière rangée de panneaux PIV (il s'agit ici de la rangée la plus haute), permettant un emboitement de chaque panneau 3 de cette rangée dans le profilé du dessus, ici le profilé 12, puis par poussée de l'extrémité inférieure du panneau 3 vers son placement final, dans l'alignement vertical de la couche.

En référence à la figure 2, les profilés 11 peuvent former une jonction d'angle à distance de deux parois P1, P2 perpendiculaires. Les profilés 11 du bas ainsi que des profilés 12 du haut peuvent être agencés de façon similaire. La figure 2 montre un agencement contigu de ces profilés 11 avec la branche latérale d'un des profilés 11 (ici parallèle à la paroi P2) accolée contre une extrémité d'un autre de ces profilés 11 (qui est ici parallèle à la paroi P1). Les profilés 13 qui ont une section en H sont remplacés, au niveau de l'angle, par deux profilés verticaux ayant une section en U et accolés l'un à l'autre (base de l'un accolée à branche latérale de l'autre).

Les profilés d'appui 5 maintiennent ici un écartement entre les parements externes 8, 8' et les panneaux 3, avec une éventuelle réduction locale de cet écartement lorsque le parement externe 8 parallèle à la paroi P1 fait saillie derrière le parement 8' perpendiculaire (parallèle à la paroi P2), comme illustré dans le cas de la figure 2. L'écartement e qui forme l'espace G le long de la face arrière F2 de la couche de panneaux 3 peut être sensiblement constant.

De préférence, les profilés 11 et 12 sont formés d'un seul bloc en matière plastique, par exemple en polyamide, en PVC, résine de polyuréthane ou encore à base de matériaux composites, de fibres de verre, éventuellement avec des particules métalliques. Un polyamide PA 66 chargé à 25% de fibres de verre est utilisé dans un exemple de réalisation. Les profilés intermédiaires 10 et 10' peuvent être réalisés avec le même type de matière. Chacun des profilés 10, 10', 11 et 12 a ici une conductivité thermique inférieure ou égale à 0,6 W m⁻¹ K⁻¹ et de préférence inférieure à 0,25 W m⁻¹ K⁻¹. Afin de minimiser la conduction de chaleur au travers de la couche de panneaux 3, une conductivité thermique inférieure ou égale à 0,03 W m⁻¹ K⁻¹ est préférée pour le matériau des profilés 10, 10', 12 et 12. Il a été constaté qu'une conductivité trop élevée et un écartement trop important entre deux panneaux 3 adjacentes de type PIV étaient deux causes majeures de dégradation de la performance d'isolation du système d'isolation thermique. C'est pourquoi il s'avère important d'utiliser un matériau ayant une conductivité thermique faible à environ 0,5 W m⁻¹ K⁻¹, en particulier avec l'utilisation de profilés qui ont typiquement une épaisseur de l'ordre de 1-2 mm. Une épaisseur de l'ordre de 3-4 mm peut être tolérée à condition d'utiliser un matériau pour les profilés 10, 10', 11, 12 qui présente une conductivité thermique environ deux fois plus faible, de préférence inférieure à 0,10 ou 0,03 W m⁻¹ K⁻¹. Le matériau est dans ce cas considéré comme thermiquement très isolant. L'avantage d'utiliser un seul profilé à chacune des jonctions entre les tranches voisines des panneaux 3 est que l'écartement entre les deux tranches reste bien inférieur à 5 mm, et de préférence inférieur à 4 mm. Or il a été constaté une dégradation assez brutale de la performance de la couche de panneaux 3 lorsque cet écart atteint ou dépasse 4 mm. Dans ce cas, un transfert de chaleur par conduction se réalise de façon importante au niveau des jonctions et le bénéfice du super isolant dans les panneaux 3 est très dégradé, sauf à utiliser dans les jonctions une matière ayant une conductivité thermique s'approchant au mieux de celle des panneaux 3 de type PIV. Pour des raisons de coût des profilés 10, 10', 11, 12 et pour la bonne tenue mécanique de la couche, on comprend qu'il est préférable que l'écart entre les panneaux 3 soit réduit à moins de 3 mm.

Les profilés intermédiaires 10 et 10' peuvent être raccordés aux profilés verticaux 4a et/ou barres 4b par des clips (non représentés). En variante ou en complément on peut utiliser des bandes ou plaquettes adhésives adhérant à la fois aux éléments rigides 4a et 4b et aux profilés horizontaux 10 et 10', sans générer le moindre contact avec les panneaux 3 de la couche. On comprend que les éléments rigides 4a, 4b permettent de maintenir la verticalité de la couche de panneaux 3 et donc la distance de cette couche par rapport au parement externe 8 (premier espace libre E pour une lame d'air) et par rapport à la paroi P1 du bâtiment (deuxième espace G pour une lame d'air).

En référence à présent à la figure 3A, il est prévu de fixer le profilé 11 à section en U par soudage ou collage au profilé d'appui 5. Dans des variantes, le profilé 11 du bas peut se fixer par clipsage sur l'un des bords verticaux (bord adjacent 5d visible sur la figure 3A) du profilé d'appui 5 fixé au plancher 7. La fixation du profilé 12 du haut sur le profilé d'appui 6 peut être réalisée de façon similaire.

Les figures 3B, 3C et 3D montrent un système d'éclisse 11a, continu ou discontinu, intégré au profilé 11 en plastique (par exemple en polyamide ou résine polyuréthane) pour obtenir la liaison avec le profilé d'appui 5 qui est ici en matière métallique. En variante, le profilé 11 et le profilé 12 peuvent être rendus solidaire du profilé d'appui correspondant 5 ou 6 (forme de W, bi-matériau) avant les opérations de fixation des profilés d'appui respectifs 5 et 6.

Les profilés 5 et 6 peuvent être choisis parmi les rails utilisés dans une ossature standard pour contre cloison de paroi, et présentent par exemple une hauteur d'environ 25-30 mm et une largeur inférieure à 50 mm, par exemple comprise entre 25 et 48 mm.

En référence aux figures 3A à 6B, les profilés 10, 11 et 12 présentent chacun une ou deux cavités C définies entre une paire de branches latérales de ces profilés 10, 11, 12. Le fond de ces cavités C est défini par une base d'appui B qui est sensiblement parallèle à la direction générale définie par les rangées de panneaux 3. La base d'appui B est en contact avec une tranche d'au moins un des panneaux, tandis que les branches avant b1 et arrière b2 des profilés 10, 11 et 12 recouvrent et sont en contact avec des zones de marge des faces respectives avant et arrière de ces même panneaux 3. Les cavités C permettent ainsi la fixation d'un ou plusieurs panneaux 3, le maintien mécanique étant obtenu avec une légère compression du panneau 3 PIV vers les bords inférieur et supérieur du panneau 3.

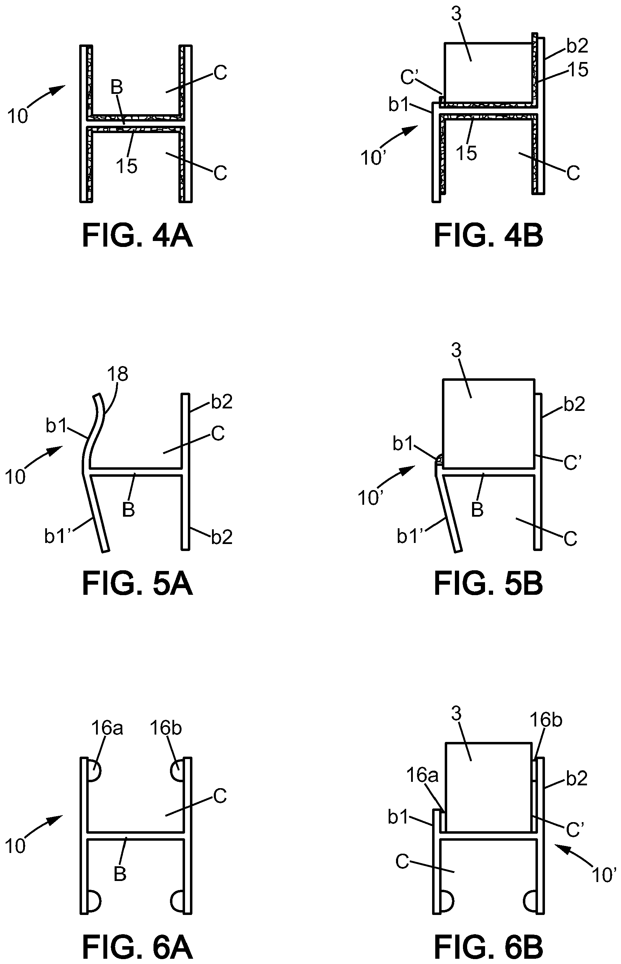

En référence aux figures 3A-3B et 4A-4B et selon une forme de réalisation préférée, des moyens élastiquement déformables, ici sous la forme de mousse alvéolaire compressible 15, recouvrent les faces intérieures des cavités C associées à au moins une rangée de panneaux 3, pour serrer les panneaux de cette rangée.

Comme cela est bien visible sur la figure 3A, l'épaisseur d3 du panneau 3 est légèrement supérieure à la largeur d2 de la cavité C définie dans le profilé, ici le profilé 11 du bas. Ainsi, le panneau 3 peut s'emboîter par glissement entre les branches verticales du profilé 11 en étant protégé par la couche de mousse compressible 15. La couche de mousse est ici conformée en U avec une épaisseur comprise entre 1 et 3 mm par exemple. Le maintien et la pression sur la tranche T et l'extrémité inférieure des faces avant et arrière du panneau 3 sont obtenus par la nature et l'épaisseur de la mousse de protection, conduisant à une largeur libre inférieure de 0,5 à 2 mm (éventuellement inférieure d'environ 3 mm) à l'épaisseur d3 des panneaux 3 de type PIV. La partie haute de la mousse compressible 15 peut être en biseau pour favoriser l'emboitement du panneau 3. L'étanchéité à l'air est assurée par le contact serré entre la mousse compressible 15 et la surface externe du panneau 3. On comprend qu'il s'agit d'un léger serrage qui préserve l'intégrité du panneau 3. Le même principe s'applique pour les deux cavités C du profilé intermédiaire 10 ou les deux cavités C et C' du profilé intermédiaire 10', qui sont visibles sur la figure 4A, respectivement 4B. On comprend que la circulation d'air est alors limité dans les cavités C, C' et une étanchéité durable peut être obtenue, de sorte qu'il est possible d'isoler le volume d'air situé derrière la couche de panneaux par rapport à la lame d'air formée entre la face avant F1 de la couche et le parement externe 8.

En référence aux figures 3D, 6A et 6B, un effet de serrage analogue est obtenu sur les faces avant et arrière du panneau 3 en utilisant un ou des bourrelets 16a, 16b rapportés ou intégrés à la forme du profilé 10, 10', 11 ou autre profilé horizontal qui assure cette fonction. Dans le cas des cavités C formées dans les profilés 10, 10' 11 ou 12 par exemple, ces bourrelets avant 16a et arrière 16b peuvent être agencés à distance de la base B, sur les faces intérieures des branches verticales et s'étendent sur la longueur du profilé 10, 10', 11 ou 12, horizontalement. Dans ce cas l'épaisseur d3 du panneau 3 est supérieure à la largeur localement définie au niveau du ou des bourrelets 16a, 16b. Ici également, la largeur libre formée dans la cavité C au niveau des bourrelets 16a, 16b peut être inférieure de 0,5 à 2 mm (ou éventuellement inférieure d'environ 3 mm) à l'épaisseur d3. Les bourrelets 16a, 16b ont ici une surface de contact convexe et peuvent présenter une compressibilité comparable à celle de la mousse 15 alvéolaire.

Bien entendu le glissement du panneau 3 s'effectue de façon sensiblement verticale jusqu'à positionner la tranche T en contact avec la base d'appui B. Un des avantages de ce système de maintien par pression, outre l'étanchéité à l'air, est d'envisager qu'une seule dimension de profilé en largeur puisse convenir à plusieurs épaisseurs pour le panneau 3 de type PIV.

En référence aux figures 3C et 5A, des profilés 10 et 11 sont en matière plastique. Ils sont ici représentés avec une branche avant b1 ou arrière b2 qui présentent une lèvre d'étanchéité. Dans une forme de réalisation particulière, l'épaisseur de la branche b1 ou b2 peut être réduite localement, par exemple à mi-hauteur de la branche b1 ou b2 pour créer une légère flexibilité qui facilite le glissement par emboitement du panneau 3 vers sa position finale dans la cavité C.

On obtient ainsi un glissement, représenté par la flèche 19 dans les figures 3B-3D, avec un minimum de frottement entre l'enveloppe 3b du panneau 3 et les branches b1-b2 du profilé correspondant. On peut noter que les profilés 13 peuvent présenter une section en H en coupe transversale qui est identique à celle des profilés 10 et permettre le même genre d'emboitement des panneaux.

En référence à la figure 4B, le profilé intermédiaire 10' qui peut être agencé entre la rangée supérieure et une rangée adjacente présente ici une cavité C' particulière qui débouche du côté avant de la couche de panneaux 3. Ce profilé intermédiaire 10' à en section une forme qui diffère du H représenté à la figure 4A en ce que la branche b1 est raccourcie très significativement (ici la longueur de la branche b1 est inférieure à 10% de la longueur de la branche b2). Le profilé 10' est donc dissymétrique. La cavité C, ici inférieure, est identique à la cavité inférieure montrée sur la figure 4A. La mousse compressible 15 enveloppe intégralement la tranche du panneau 3 et joue le rôle d'un joint. L'épaisseur de cette mousse est typiquement de l'ordre de 1 mm. Une fois le panneau 3 installé, l'épaisseur au niveau de la base B qui relie les branches b1, b2 est de préférence inférieure ou égale à 4 mm, et plus préférentiellement comprise entre 0,1 et 3 mm. Dans l'exemple des figures, la base B a une épaisseur d'environ 0,6 mm. Avec cette minceur au niveau des jonctions, On comprend que les panneaux 3 de la couche définissent une surface qui peut être considérée comme égale à la totalité de la surface du système d'isolation 1. Bien entendu, on peut fixer dans une variante la mousse compressible 15 seulement sur une partie de la base (B) et/ou seulement sur l'une des faces internes de l'un et/ou l'autre des branches avant et arrière b1, b2.

En référence aux figures 5A et 5B, on peut voir qu'au moins une partie des cavités C peut être délimitée par une branche, ici une branche avant b1', qui penche vers l'intérieur de la cavité C en s'approchant de son bord libre. Dans ce cas, une force de rappel élastique s'exerce, par effet de mémoire de forme du profilé 10, respectivement 10', contre le panneau 3 emboîté par glissement dans la cavité C. Le bord libre de ces branches b1' présente de préférence une surface convexe pour le contact avec le panneau 3. On comprend que ce type de branche b1' peut être utilisé dans les profilés 11 et 12.

Comme illustré sur la figure 6B, la présence d'un bourrelet 16a formé par de la mousse compressible 15 ou intégralement formée avec la branche avant raccourcie b1 permet un maintien efficace du panneau 3 dans la cavité C' du profilé intermédiaire 10'. Ici le bourrelet 16a fait saillie radialement vers l'intérieure de la cavité C, de façon similaire au bourrelet 16b. Dans l'exemple de la figure 5B, la branche b1 peut être formée d'un bourrelet compressible qui fait saillie depuis la base B, selon une direction perpendiculaire à la base B.

Dans l'exemple des figures 4B et 5B, il peut être envisagé de fixer une bande adhésive non agressive pour l'enveloppe 3b du panneau 3, en recouvrant la branche b1 raccourcie du panneau intermédiaire 10' et une portion adjacente de la face avant du panneau 3. On s'assure ainsi que l'étanchéité à l'air est parfaitement réalisée.

Le procédé de montage du système 1 par utilisation des profilés 10, 10', 11 et 12 va à présent être décrit en référence aux figures 1-2, 3A-3D et 7A-7B.

Avant de disposer les panneaux 3 de type PIV, l'opérateur installe les éléments rigides et structurels de l'ossature 2, en particulier les profilés d'appui 5, 6 parallèlement à la paroi P1 aux deux extrémités opposées ((haut et bas) de l'ossature 2. La base 5b du profilé d'appui 5 à section en U est fixée au plancher 7 à l'aide de premiers éléments de fixation rigide de l'ossature 2, ici des vis 5d. La base 6b du profilé d'appui 6 à section en U est fixée de façon analogue au plafond à l'aide de deuxièmes éléments de fixation rigide de l'ossature 2. Un espace G est laissé entre la paroi P1 et la couche de panneaux 3. Le profilé du bas 11, en matériau peu conducteur de la chaleur, est ensuite fixé au profilé d'appui 5, en étant placé du côté de la paroi P1 à isoler. Une section en W est obtenue en accolant les deux sections en U de cette paire de profilés 5 et 11.

La première rangée de panneaux 3 est alors formée, par emboîtement des panneaux 3 de manière serrée dans les cavités C des profilés 11, par exemple comme illustré sur l'une des figures 3A-3D. Cette rangée horizontale peut être optionnellement complétée avec des profilés 13 verticaux à section en H comme cela est visible sur la figure 2. Il peut être prévu de fixer un ruban adhésif à la jonction entre les profilés 13 et le profilé 11 du bas pour obtenir une bonne étanchéité à l'air entre deux panneaux 3 adjacents dans la première rangée.

La deuxième rangée de panneaux 3 de type PIV est mise en place après la pose des profilés intermédiaires 10 qui recouvrent intégralement, de manière étanche, la tranche supérieure des panneaux 3 de la première rangée. Le montage des panneaux 3 de la deuxième rangée est analogue à celui de la première rangée lorsque la couche comprend au moins trois rangées. On comprend que plusieurs rangées successives (à un niveau de hauteur croissant) peuvent être formées de façon identique.

En référence à présent aux figure 7A et 7B, avant de former la dernière rangée de panneaux 3 de type PIV, on met en place sur la tranche supérieure des panneaux 3 de la rangée précédente un profilé intermédiaire 10' dont une branche est raccourcie ou absente (le profilé 10' ayant une section en H modifiée). De ce fait, la cavité C' prévue pour la tranche inférieure des panneaux 3 de la dernière rangée débouche vers l'avant et les panneaux 3 sont essentiellement maintenus par la banche arrière b2.

Lorsque la branche b1 associée à la cavité C' forme une courte projection, par exemple d'une hauteur inférieure à 5 ou 10 mm, une étanchéité convenable est obtenue. A titre comparatif, les branches avant et arrière b1, b2 sans raccourcissement peuvent s'étendre sur une distance de préférence supérieure à 10 mm et typiquement au moins de l'ordre de 30 mm. En l'absence de cette branche b1, on fixe un ruban adhésif parallèlement à la rangée, de façon à maintenir bien verticalement les panneaux 3 de la dernière rangée et étanchéifier la zone entre le profilé intermédiaire 10' et la tranche T correspondante du panneau 3 (les panneaux 3 formant de préférence des angles droits au niveau des coins). En référence à la figure 7B, on comprend que le profilé 12 est déjà connecté au profilé d'appui 6 (qui forme un rail horizontal supérieur comme illustré sur la figure 1) par sa branche arrière b2.

Lorsque la distance entre la dernière rangée de panneaux 3 et le plafond est très faible, le profilé 12 du haut complète la couche de panneaux 3, ce profilé étant fixé au profilé d'appui 6 avant de former la dernière rangée. En revanche lorsque cette distance est significative mais ne peut être comblée par des panneaux 3 de dimension standard, une plaque ou panneau complémentaire, par exemple à base de polyuréthane et de préférence de conductivité inférieure à 30 mW m⁻¹ K⁻¹, est utilisé pour compléter la couche de panneaux 3. Ce panneau complémentaire peut s'emboîter dans un profilé intermédiaire 10' et dans le profilé du haut 12 de la façon illustrée sur la figure 7B, un ruban adhésif pouvant éventuellement compléter la jonction avec le profilé intermédiaire 10'.

Après la formation des rangées de panneaux 3, on raccorde les éléments structurels verticaux, ici des profilés 4a et montants 4b comme illustré sur la figure 1, aux profilés d'appui 5, 6 qui sont fixés respectivement au plancher 7 et au plafond de la pièce du bâtiment. Les clips ou autres organes de liaison agencés selon une direction perpendiculaire à la paroi P1 sont utilisés pour maintenir la verticalité de la couche de panneaux 3. Ce maintien peut être réalisé de manière conventionnelle par vissage ou sertissage.

Le parement externe 8 est fixé sur les profilés et montants verticaux 4a, 4b ainsi que sur les faces d'appui 5a, 6a des profilés d'appui 5 et 6, par exemple avec des vis de longueur inférieure à la distance d1 et de préférence strictement inférieure à l'écartement prévu pour l'espace libre qui s'étend le long du parement externe 8. Juste avant la pose du parement externe 8, les raccords de fluides, les gaines électriques et les connexions pour prises électriques (non représentés) sont positionnés dans l'espace libre E, au même niveau que les montants 4a, 4b de l'ossature 2.

Bien que la description qui précède présente le système d'isolation thermique 1 comme une contrecloison rapportée sur des parois P1, P2 existantes, on comprend que le système d'isolation thermique 1 peut être assemblé pour former une nouvelle cloison qui sépare une pièce en deux pièces. Dans ce cas un élément de cloison tel qu'un parement remplace la paroi P1 et des profilés d'appui additionnels similaires aux profilés 5, 6 (ainsi que des éléments structurels verticaux) peuvent être utilisés entre la couche de panneaux 3 et cet élément de cloison.

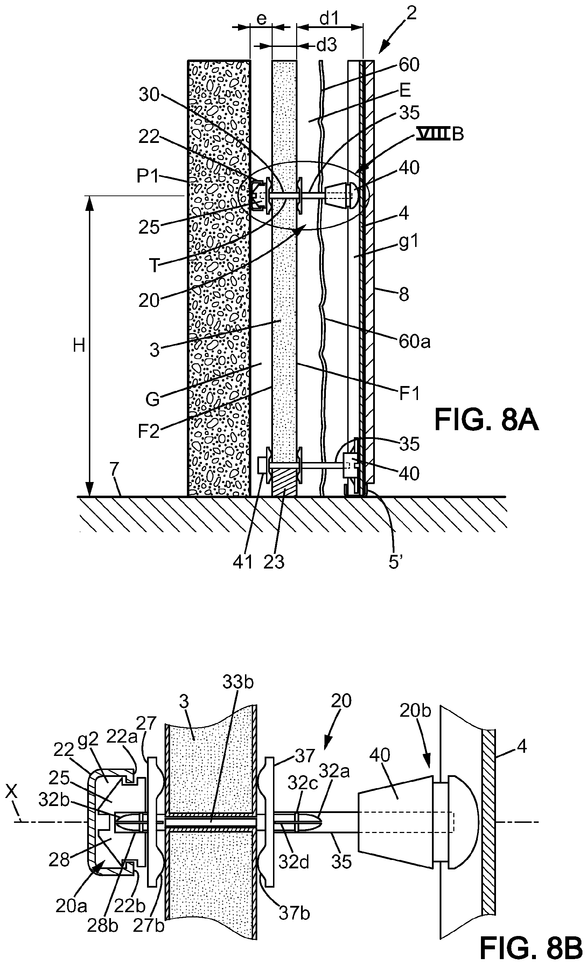

Dans la forme de réalisation décrite en référence aux figures 1 à 7B, les jonctions entre panneaux 3 de type PIV sont réalisées en utilisant des profilés 10, 10', 11, 12 qui s'étendent horizontalement parallèlement aux rangées de panneaux 3. On comprend cependant que certaines des jonctions peuvent être réalisées différemment. Par exemple, au moins les profilés intermédiaires 10 et/ou 10' peuvent être remplacés, en totalité ou partiellement, par des dispositifs d'entretoisement 20 de la figure 8B qui forment des appuis intermédiaires pour le maintien de la couche de panneaux 3 (avec un maintien d'au moins deux panneaux 3 de type PIV). De tels dispositifs d'entretoisement 20, entièrement distincts des profilés 10, 10', 11, 12, vont être décrits plus particulièrement dans les figures 8A à 14.

En référence à présent aux figures 8A à 14, il est prévu d'autres formes de réalisation du système d'isolation thermique 1 (conformes à l'invention) avec des dispositifs d'entretoisement 20 qui traversent la couche isolante de panneaux 3 entre les coins 3c de plusieurs panneaux 3 de type PIV. En référence à la figure 8A, le système d'isolation thermique 1 forme ici un élément mural qui recouvre la paroi P1 d'un bâtiment et comprend un parement externe 8, des panneaux 3 de type PIV ayant chacun une forme de plaque avec des coins 3c, et répartis en une couche de panneaux 3, et une ossature 2 pour fixer les panneaux 3 dans la couche. Dans les exemples représentés, les panneaux 3 ont un format rectangulaire et présentent quatre coins 3c et quatre tranches T. L'ossature 2 présente ici :
- des moyens structurels rigides 4, 5', 22 en appui sur au moins un substrat du bâtiment (notamment le plancher 7 visible sur la figure 8A) et agencés entre le parement externe 8 et la face avant F1 de la couche de panneaux 3 ; et
- les dispositifs d'entretoisement 20 qui forment des appuis intermédiaires pour le maintien de la couche de panneaux 3.

Comme cela est bien visible sur les figures 8A et 8B, les panneaux 3 sont agencés en rangées, les différentes rangées étant superposées pour former ici une seule couche de panneaux 3 qui s'étend perpendiculairement au plancher 7. L'ossature 2 du système d'isolation thermique 1 comporte des profilés 4, 5', 22 qui s'étendent de préférence parallèlement et/ou perpendiculairement aux rangées. Ici, des premiers profilés 4 qui font partie des moyens structurels rigides s'étendent entre le plancher 7 et le plafond (verticalement) pour soutenir le parement externe 8. La liaison des premiers profilés 4 avec le plancher 7 et le plafond est réalisée d'une façon connue en soi. On peut par exemple prévoir de profilés 5' de préférence métalliques formant rails de fixation pour l'accrochage au plancher 7 et au plafond des premiers profilés 4. On comprend que les moyens structurels rigides peuvent inclure des profilés 4, 5' qui peuvent être utilisés dans l'ossature 2 illustrée sur la figure 1, entre la couche de panneaux 3 et le parement externe 8.

Un panneau complémentaire 23, par exemple à base de polyuréthane et de conductivité inférieure à 30 mW m⁻¹ K⁻¹, est optionnellement utilisé pour ajuster le niveau en hauteur de la couche de panneaux 3. Dans l'exemple de la figure 8A, la hauteur du panneau complémentaire 23 est sensiblement égale à l'épaisseur d3 des panneaux 3, par exemple de l'ordre de 20 mm.

Des deuxièmes profilés 22, qui s'étendent parallèlement et au même niveau de hauteur que les jonctions entre deux rangées successives de panneaux 3, sont fixés directement contre la paroi P1. Les premiers et deuxièmes profilés 4, 22 peuvent être métalliques ou en une matière présentant une rigidité suffisante pour structurer l'élément mural. Ici, le ou les deuxièmes profilés 22 forment un seul rail continu dont le niveau de hauteur correspond par exemple à la jonction entre une première rangée et une deuxième rangée de panneaux 3 ou à la jonction entre cette deuxième rangée et une troisième rangée.

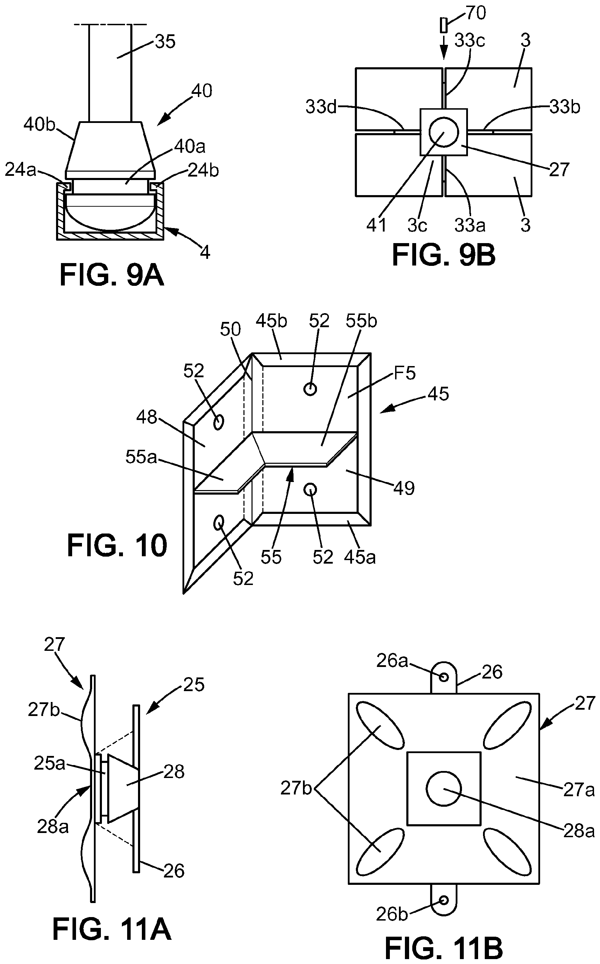

Au niveau des jonctions entre deux rangées successives, les dispositifs d'entretoisement 20 s'étendent chacun depuis l'un des premiers profilés 4 jusqu'à l'un des deuxièmes profilés 22. Dans l'exemple des figures 8A-8B et 9A, chacun des profilés 4 et 22 présente une section en U en coupe transversale et comporte des éléments d'appui 24a-24b, 22a-22b, ici des retours qui forment des rebords d'accrochage.

Un raccordement sur ces profilés 4, 22, de préférence par clipsage, est réalisé pour chacune des extrémités 20a, 20b de ces dispositifs d'entretoisement 20. Au niveau des bordures de la rangée inférieure, de la rangée supérieure, et éventuellement au niveau des extrémités latérales de la couche de panneaux 3, il peut être prévu des dispositifs d'entretoisement 20 plus courts, qui ne sont raccordés qu'à un seul profilé, par exemple le premier profilé 4. On comprend qu'au moins les deuxièmes profilés 22 sont optionnels, étant entendu que la paroi P1 du bâtiment peut servir d'ancrage à l'extrémité arrière 20b des dispositifs d'entretoisement 20.

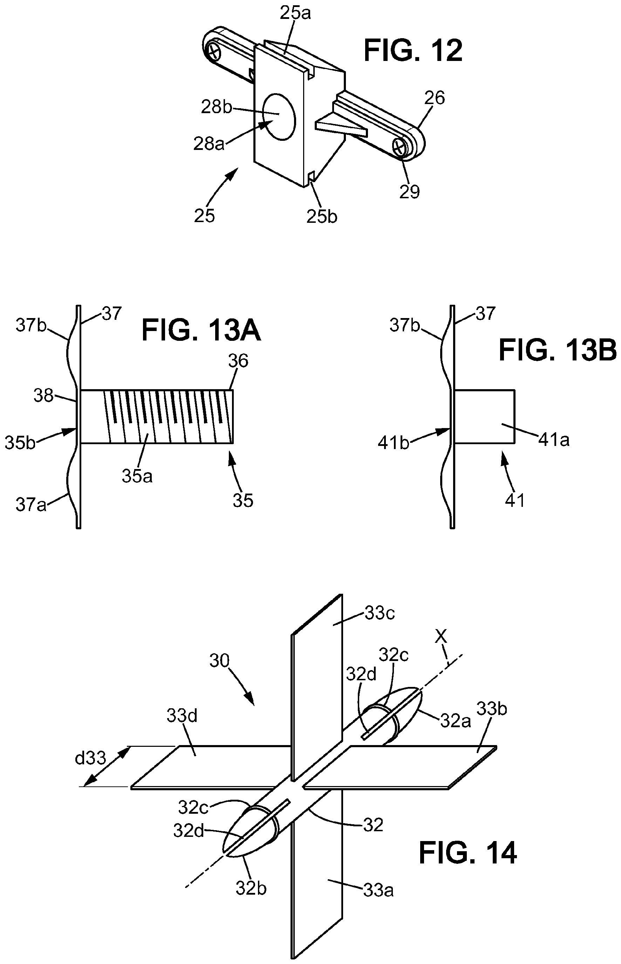

En référence plus particulièrement aux figures 8B et 14, on peut voir que les dispositifs d'entretoisement 20 comprennent plusieurs pièces associées pour former des appuis intermédiaires entre les premiers profilés 4, ici verticaux, et la paroi P1. Parmi ces pièces, on trouve de l'arrière vers l'avant : un élément support 25 ici clipsé sur le deuxième profilé 22 et agencé à l'arrière de la couche de panneaux 3, un élément étoilé 30 agencé en travers de la couche de panneaux 3, une tige d'entretoisement 35 qui prolonge l'élément étoilé 30 selon un axe longitudinal X défini par la portion centrale 32 de l'élément étoilé 30 et un élément de raccordement 40 réglable qui se fixe sur l'un des premiers profilés 4, de préférence en étant clipsé de manière similaire à l'élément support 25.

Chacun des dispositifs d'entretoisement 20 s'étend selon une direction transversale par rapport à la couche de panneaux 3. Les dispositifs d'entretoisement 20 permettent de maintenir l'écartement en profondeur d1 entre le parement externe 8 (ici fixé sur les premiers profilés 4 verticaux) et la face avant F1 de la couche de panneaux 3. Ces dispositifs d'entretoisement 20 sont de préférence non métalliques et au moins l'élément étoilé 30 présente une conductivité thermique très inférieure à 0,6 W m⁻¹ K⁻¹ et de préférence inférieure à 0,25 W m⁻¹ K⁻¹ (plus préférentiellement inférieure à 0,1 W m⁻¹ K⁻¹).

Les pièces constitutives des dispositifs d'entretoisement 20 vont à présent être décrites plus en détail en référence aux figures 9A-9B, 11A-11B, 12, 13A-13B et 14.

En référence aux figures 11A-11B et 12, l'élément support 25 comprend des pattes de fixation 26 parallèles au plan formé par la couche de panneaux 3, une platine 27 parallèle à la couche de panneaux 3 et un corps creux 28 qui s'étend entre les pattes de fixation 26 et la platine 27. Cet élément support 25 est monolithe et constitué de préférence de thermoplastique injecté qui présente une très bonne rigidité. L'intérieur du corps creux 28 forme une cavité 28a qui débouche au travers d'une ouverture centrale 28b formée dans la platine 27. La platine 27 peut cependant, dans une variante, être réalisée comme une pièce séparée.

Les pattes de fixation 26 peuvent être utilisées pour fixer le dispositif d'entretoisement 20 directement sur la paroi P1. Dans ce cas, les pattes de fixation 26 présentent deux orifices 26a, 26b respectivement situées près de l'extrémité libre des pattes de fixation 26 pour le passage de vis 29 (voir figure 12). Lorsqu'on clipse l'élément support 25 sur des deuxième profilés 22, on comprend que les pattes de fixation 26 peuvent être considérées comme optionnelles. L'élément support 25 forme une première extrémité 20a axiale du dispositif d'entretoisement 20 (extrémité arrière).

Comme cela est visible sur la figure 11A et 12, le corps creux 28 est pourvu d'une cavité 28a cylindrique (qui peut former un trou traversant), par exemple rainurée, permettant de recevoir l'élément étoilé 30 montré sur la figure 14.

Le corps creux 28 comporte ici deux faces latérales diamétralement opposées par rapport à la cavité 28a qui présentent chacune une rainure 25a, respectivement 25b permettant la fixation aux éléments d'appui 22a et 22b des deuxièmes profilés 22. Ici, l'opérateur peut simplement clipser l'élément support 25 sur les retours d'un profilé 22 qui forme une fourrure. Dans un mode de réalisation préféré, on utilise des fourrures de type « S47 » que l'on trouve aisément dans le commerce par exemple.

En référence aux figures 8B, 11A et 11B, la platine 27 intégralement formée avec le corps creux 28 ou en appui sur ce dernier présente une face intérieure 27a globalement plane sur laquelle des organes 27b font saillie. La surface définie par la face intérieure 27a de la platine 27 est par exemple comprise entre 5 cm² et 50 cm². L'ouverture centrale 28a représente dans cet exemple environ 10% de la surface de la platine 27.

Comme cela est visible sur la figure 8B, le dispositif d'entretoisement 20 comporte une autre platine 37, de sorte que les deux platines 27, 37 présentent chacune une face intérieure 27a, 37a pour maintenir un alignement des panneaux 3 dans la couche de panneaux 3 de type PIV. Chacune des platines 27, 37 s'étend de façon annulaire autour de l'ouverture centrale 28b ou 38 formée au centre de celles-ci. Les ouvertures centrales 28b, 38 des platines 27, 37 ont les mêmes dimensions et sont coaxiales dans le dispositif d'entretoisement 20.

Dans l'exemple des figures 11A et 11B, chacune des faces intérieures 27a, 37a des platines présente au moins quatre organes saillants 27b, respectivement 37b, qui sont élastiquement déformables et répartis dans quatre zones angulaires complémentaires. Ces organes saillants 27b, 37b élastiquement déformables viennent chacun en appui sur une face d'un des panneaux 3. Les organes saillants 27b, 37b présentent une surface plane ou convexe pour le contact avec les panneaux 3, ce qui rend le contact avec l'enveloppe externe 3b du panneau 3 non agressif.

En référence à figure 13A, la platine 37 du côté avant du dispositif d'entretoisement 20 est ici agencée à l'extrémité d'une tige d'entretoisement 35 qui permet de former l'espace libre E entre le parement externe 8 et la face avant F1 de la couche de panneaux 3. Cette tige d'entretoisement 35 sert en outre à ajuster la verticalité du parement externe 8 de l'élément mural (contrecloison), lorsque l'utilisateur désire disposer d'un tel espace libre E (lame d'air) pour le passage des raccordements de fluides et/ou autres connexions (notamment électricité). La tige d'entretoisement 35 est de préférence constituée d'une matière thermoplastique injectée, qui présente une très bonne rigidité.

La tige d'entretoisement 35 présente une surface externe filetée 35a de manière à former une vis. Un perçage 35b est réalisé au travers de la tige 35 et débouche au niveau de l'ouverture centrale 38 de la platine 37, de sorte que l'extrémité avant 32a (mâle) de la portion centrale 32 de l'élément étoilé 30 peut s'engager dans ce perçage 35b de la tige d'entretoisement 35.

On comprend que la tige d'entretoisement 35 et l'élément support 25 peuvent être encliquetés de la même façon sur la portion centrale 32 de l'élément étoilé 30. De préférence, la tige d'entretoisement 35 recouvre complètement l'extrémité avant 32a (mâle) de la portion centrale 32 qui est alors enfoncée dans le perçage 35b. Il est préférable d'utiliser une même matière plastique injectée pour ces pièces afin de faciliter l'encliquetage.

Dans des variantes où l'espace libre E entre le parement externe 8 et la face avant F1 de la couche de panneaux 3 n'est pas nécessaire ou peut être limité à un écartement en profondeur d1 très faible, par exemple inférieur à 10 mm, la tige d'entretoisement 35 est remplacée par un élément de raccordement 40 qui se fixe sur l'un des premiers profilés 4. Cet élément de raccordement 40 peut alors intégrer la platine 37 à une extrémité arrière de celui-ci et peut être identique à l'élément support 25. L'élément de raccordement 40 peut alors être identique ou similaire à l'élément support 25 visible sur les figures 11A-11B et vient se fixer à l'extrémité avant 36 de la tige d'entretoisement 35.

Dans des variantes, la platine 27 ou 37 peut cependant constituer une pièce intercalaire dans le dispositif d'entretoisement 20. Ainsi, bien que la platine 37 a été décrite comme solidaire de la tige d'entretoisement 35 ou de l'élément de raccordement 40, on comprend que la platine 37 du côté avant peut être une pièce distincte rapportée sur l'extrémité avant 32a de la portion centrale 32 de l'élément étoilé 30 et maintenue serrée contre une face correspondante d'un panneau 3 de type PIV par la tige d'entretoisement 35 ou par un élément de raccordement 40 tel que montré sur la figure 9A.

En référence à la figure 9A, l'élément de raccordement 40 présente des rainures formées sur sa surface externe de façon analogue aux rainures de l'élément support 25 ou une rainure annulaire 40a. Dans une variante, il peut être prévu de doubler les rainures avec un décalage axial. Dans ce dernier cas on comprend qu'un tel élément de raccordement 40 peut servir à ajuster la distance d'écartement en profondeur d1 entre le parement externe 8 et la face avant F1 de la couche de panneaux 3, selon que l'on positionne les éléments d'appui 24a-24b des premiers profilés 4 dans les rainures les plus en avant ou dans les rainures les plus en arrière. Alternativement, et en particulier lorsque l'espace libre E entre le parement externe 8 et la face avant F1 de la couche de panneaux 3 doit être important, l'élément de raccordement 40 réglable comporte un corps tubulaire 40b avec un filetage du côté de sa face interne pour être vissé sur la tige d'entretoisement 35.

L'élément de raccordement 40 réglable forme une deuxième extrémité 20b axiale (avant) du dispositif d'entretoisement 20. Dans un mode de réalisation préféré, cet élément de raccordement 40 est fixé sur un ou des éléments d'appui 24a-24b des premiers profilés 4, qui sont typiquement des fourrures « S47 » commercialisés par la société Lafarge. Les premiers profilés 4 sont ici agencés verticalement et s'étendent sur une hauteur sensiblement égale à la hauteur du parement externe 8.

En haut et en bas de l'élément mural formant la contrecloison, les dispositifs d'entretoisement 20 ne sont pas sollicités mécaniquement. Afin de simplifier le montage des dispositifs d'entretoisement 20 à ces extrémités, on peut alors utiliser un simple bouchon 41 en remplacement de la tige d'entretoisement 35 et de l'élément de raccordement 40 car il n'y pas besoin à ces endroits particuliers de raccordement sur les deuxièmes profilés.

La figure 13B montre un exemple d'un tel bouchon 41 qui comporte ici la platine avant 37, un corps creux 41a qui s'étend vers l'arrière de la platine 37, et présente un trou rainuré 41 b qui traverse centralement la platine 37. L'extrémité avant 32a de la portion centrale 32 de l'élément étoilé 30 peut s'engager dans ce trou rainuré 41 b. Les rainures internes permettent de régler le serrage par des panneaux 3 par les organes saillants 37b de la platine 37. Le bouchon 41 est en matière plastique injectée pour permettre un encliquetage aisé sur l'élément étoilé 30.

En référence à la figure 14, la portion centrale 32 de l'élément étoilé 30 est de préférence plus longue que l'épaisseur d3 des panneaux 3 et définissant l'axe longitudinal X. Cette portion central 32 s'étend entre son extrémité arrière 32b qui se connecte avec l'élément support 25 et son extrémité avant 32a qui se connecte avec la tige d'entretoisement 35 ou à un élément de raccordement 40. La fonction de support des panneaux 3 est assurée par les branches 33a, 33b 33c, 33d de l'élément étoilé 30 et le réglage en profondeur est par exemple permis par le mode de fixation des extrémités 32a et 32b, ici de type mâle, de la portion centrale. Comme cela est bien visible sur les figures 8B et 14, la portion centrale 32 fait saillie de part et d'autre des branches 33a, 33b, 33c, 33d selon l'axe longitudinal X pour définir les deux extrémités mâles.

La portion centrale 32 est mince et allongée et quatre branches 33a, 33b, 33c, 33d sont agencées de façon symétrique autour de l'axe longitudinal X dans l'exemple représenté. Une croix est ainsi formée et les quatre branches 33a, 33b, 33c, 33d définissent quatre angles respectifs de 90° autour de l'axe longitudinal X. Ainsi des branches associées par paire peuvent recevoir des coins 3c des panneaux 3 de format parallélépipédique.

La portion centrale 32 a une forme de tige creuse de section ici circulaire. Le diamètre externe de cette section est sensiblement égal au diamètre de la cavité de l'élément support 25, au diamètre interne du perçage de la tige d'entretoisement 35 et au diamètre interne du perçage du bouchon 41. Les fentes 32d aux extrémités 32a, 32b de cette portion centrale 32 permettent au plastique de se déformer pour pouvoir entrer plus facilement dans la cavité 28a du corps creux 28 de l'élément support 25 ou dans un perçage similaire.

Dans des variantes, la forme de croix peut être différente, par exemple similaire à la croix latine. Il est préférable d'avoir au moins trois branches qui ont sensiblement la même longueur pour chacun des dispositifs d'entretoisement. Les branches 33a, 33b, 33c, 33d sont fines et présentent de préférence une épaisseur inférieure ou égale à 3 mm et de préférence inférieure à 2 mm. Plus généralement, une épaisseur comprise entre 0,5 mm et 5mm peut être choisie et il est préférable que la portion centrale 32 définisse entre deux branches opposées un écartement inférieur ou égal à 5 mm, de façon à ce que l'écartement entre les panneaux 3 adjacents soit inférieur ou égal 5 mm. Si on utilise des panneaux 3 PIV de 20 ou 30 mm d'épaisseur, il est préférable que le ratio entre l'épaisseur des branches 33a, 33b, 33c, 33d et l'épaisseur des panneaux 3 soit inférieur à 1 :2 et bien plus préférentielement inférieur à 1:10 pour limiter cet écartement. Bien entendu, cet écartement peut être éventuellement relativement grand dans des variantes utilisant des joints ayant une conductivité thermique très faible, par exemple très inférieure à 0,1 W m⁻¹ K⁻¹ et de préférence inférieure à 0,05 W m⁻¹ K⁻¹. A titre indicatif, des joints à base de polyuréthane ayant une conductivité thermique de l'ordre de 0,025 W m⁻¹ K⁻¹ permettent de compenser un écartement de l'ordre de 5 mm ou légèrement supérieur.

Dans l'exemple de la figure 14, chacune des branches 33a, 33b, 33c, 33d a une longueur d'environ 40 mm mesurée depuis l'axe longitudinal X et la largeur d33 est de l'ordre de 15 mm, cette largeur d33 étant très proche de l'épaisseur des panneaux 3. Dans l'exemple de la figure 9B (où les quatre panneaux 3 ne sont pas intégralement représentés), les branches 33a, 33b, 33c, 33d ont une longueur supérieure ou égale à 40 mm et sont en contact chacune avec deux tranches de panneaux 3 par leurs deux faces opposées. Ces faces de contact ainsi que les faces intérieures 27a, 37a des platines 27 et 37 sont parfaitement lisses. Les deux branches horizontales 33b, 33d sont parallèles aux deuxièmes profilés 22 et on comprend que la position du dispositif d'entretoisement 20 peut être ajustée au préalable en faisant coulisser l'élément support 25 dans un des deuxièmes profilés 22, pour obtenir une distance entre les dispositifs d'entretoisement 20 qui correspond exactement à la dimension en largeur d'un panneau 3 de type PIV.

Si les panneaux 3 de type PIV ont une épaisseur qui dépasse la largeur des branches 33a, 33b, 33c, 33d, par exemple de 5-15 mm, le maintien des panneaux 3 est obtenu à l'aide des platines 27, 37 ou autres moyens de maintien similaire pour le maintien des coins 3c des panneaux 3. Lorsque l'élément support 25 présente une platine 27 fixe, un réglage en position est obtenu en ajustant l'enfoncement de l'extrémité arrière 32b de la portion centrale 32 dans la cavité 28a de l'élément support 25. Un bourrelet annulaire 32c est par exemple formé sur cette extrémité arrière et une fente longitudinale 32d permet de déformer l'extrémité arrière 32b lors de l'enfoncement. Les rainures dans la cavité 28a de l'élément support 25 forment des crans pour bloquer la position d'enfoncement souhaitée.

L'extrémité arrière 32b peut présenter une forme identique à l'extrémité avant 32a pour permettre de régler l'enfoncement de la tige d'entretoisement 35 visible sur la figure 13A ou du bouchon 41 visible sur la figure 13B. Dans une variante, le réglage en position peut se faire uniquement d'un seul côté. Dans ce cas, une des platines 27 ou 37 peut être formée intégralement avec l'élément étoilé 30. Dans une variante de réalisation, la fente 32d permet aussi, à l'aide d'une broche formant coin, de fixer le raccordement.

Dans un mode de réalisation préféré, les organes saillants 27b, 37b formés sur les faces intérieures 27a, 37a des platines 27, 37 peuvent être compressés à la manière d'un ressort et peuvent exercer une force de rappel qui sert pour le maintien des panneaux 3 comme illustré sur les figures 8A et 8B. L'extension de ces organes saillants 27b, 37b dans le sens de l'axe longitudinal X est supérieure ou égale à 2 mm, et de préférence supérieure à 3 mm. De cette façon, un maintien peut être assuré même lorsque les panneaux 3 de type PIV ont une épaisseur d3 très faible qui est inférieure à la largeur d33 des branches 33a, 33b, 33c, 33d. Ainsi avec des organes saillants 27b, 37b ayant une extension de l'ordre de 3mm, présents sur les deux faces intérieures 27a, 37a des platines 27, 37, il est permis de maintenir des panneaux 3 de 10 mm d'épaisseur avec des dispositifs d'entretoisement 20 dont les branches 33a, 33b, 33c, 33d présentent une largeur de 15 mm. De préférence, le panneau 3 à bloquer est d'abord posé en appui sur les branches 33a, 33b, 33c, 33d de l'élément étoilé 30 avant de positionner la platine 27 ou 37 en contact serré contre la face avant du panneau 3.

Bien que les exemples des figures 8A-8B, 11A-11B et 13A-13b montrent des moyens d'appui sous la forme de platine 27 ou 37 généralement planes et pourvues d'organes saillants 27, 37b sur une face intérieure 27a, 37a, il doit être compris que d'autres formes de réalisation peuvent être utilisées, par exemple sous la forme de rosaces non planes, de pièces coniques ou tronconiques ou toute autre forme adaptée, de préférence avec un perçage de façon analogue aux platines 27, 37.

En référence à présent à la figure 10, on peut voir un exemple de système pour former une jonction entre deux couche de panneaux 3 perpendiculaires ou formant un angle proche de 90° à leur intersection. Le système de jonction 45 comporte des équerres d'angles agencées dans l'angle entre un premier mur formant la paroi P1 à isoler et un autre mur de refend ou analogue à isoler qui n'est pas alignée avec la paroi P1. L'équerre comporte ici deux plaques 48, 49 ayant une épaisseur comparable et de préférence égale à l'épaisseur définie par l'élément support 25 tel que représenté sur les figures 11A-11B. Chacune des plaques 48, 49 peut être constituée de deux feuilles en matière plastiques séparées par un nid d'abeille léger qui permet d'obtenir une épaisseur plus ou moins égale à l'épaisseur de l'élément support 25.

Les plaques 48, 49 sont agencées à 90° l'une par rapport à l'autre et un amincissement peut être prévu à la jonction 50 entre les deux plaques 48, 49 pour permettre un ajustement angulaire. Une charnière relativement flexible peut être ainsi formée pour permettre l'installation sur des murs en faux équerre. Chaque plaque 48, 49 est raccordée par des vis ou organes analogues (non représentés) au mur correspondant, au travers d'au moins deux orifices 52. Le vissage dans les murs est réalisé sans que la vis affleure par rapport à la face interne F5 des plaques 48, 49, ce qui prévient le risque de détérioration des panneaux 3 de type PIV qui peuvent reposer sur une portion d'un plateau 55 en équerre (ayant la forme général d'un L dans cet exemple).

Le plateau 55 en équerre présente ici deux portions complémentaires et contigües 55a, 55b, agencées parallèlement aux rangées de panneaux 3 et à distance des extrémités inférieure 45a et supérieure 45b du système de jonction 45. Les extrémités latérales de deux panneaux 3 reposent respectivement sur l'une et l'autre de ces deux portions 55a, 55b et une bande adhésive d'étanchéité est préférentiellement utilisée pour relier ces deux panneaux 3, au moins du côté de leur face opposée aux plaques 48, 49.

On peut aussi utiliser un système de jonction 45 sous une forme différente (demi-pièce plus courte en hauteur) lorsqu'on se rapproche du plancher 7 pour la rangée du bas, le plateau 55 étant alors situé à l'extrémité inférieure 45a. De façon similaire, le plateau 55 peut être situé à l'extrémité supérieure lorsqu'on se rapproche du plafond, pour la rangée la plus haute.

Le procédé de montage du système d'isolation thermique 1 par utilisation des dispositifs d'entretoisement 20 va à présent être décrit en référence aux figures 8A-8B, 11A-11B, 13A-13B et 14.

Avant de disposer les panneaux 3 de type PIV qui sont de préférence fabriqués en usine, l'opérateur installe des éléments rigides et structurels de l'ossature 2 qui sont montés parallèlement à la paroi et répartis comme prévu par le schéma de montage, de façon à laisser un espace G disponible entre la couche de panneaux 3 et la paroi P1 et un espace E intercalaire entre la couche de panneaux 3 et le parement externe 8.

Dans l'exemple représenté sur les figures 8A-8B, on fixe respectivement au plancher 7 et au plafond des moyens structurels rigides 4, 5' en s'appuyant sur au moins un substrat du bâtiment, à distance de la paroi P1. Ces moyens structurels 4, 5' comprennent ici des rails appelés rails de doublage qui sont fixés avec l'espace suffisant entre la paroi P1 du mur à doubler et le positionnement final du parement externe 8 de finition. Le profilé 5' qui forme un tel rail inférieur, visible sur la figure 8A présente une gorge qui débouche verticalement vers le haut. Un rail supérieur (non représenté) est fixé de façon similaire sur le plafond, de sorte que le rail inférieur est à l'aplomb du rail supérieur. La gorge du rail supérieur débouche bien entendu verticalement vers le bas.

Ces rails inférieur et supérieur permettent de recevoir respectivement le bout inférieur et le bout supérieur de premiers profilés 4 métalliques (par exemple de type « S47 ») ou en matière rigide aux propriétés de résistance similaires qui servent de support au parement externe 8 (ce parement étant sous la forme d'une plaque). Les premiers profilés 4, bien visibles sur la figure 8A, forment des montants verticaux qui s'étendent entre le rail inférieur et le rail supérieur. De préférence lorsqu'il faut recouvrir un angle, les premiers profilés 4 sont situés au moins à 30 cm de l'extrémité latérale de la paroi où se situe l'angle, de façon à laisser la place pour l'installation du système de jonction 45 visible sur la figure 10.

Toujours en référence aux figures 8A-8B, un ou plusieurs deuxièmes profilés 22 qui forment une fourrure (par exemple de type « S47 ») sont installés horizontalement sur la paroi P1 de support à plus ou moins 1,3 m du sol fini. Bien entendu, cette hauteur H peut varier en fonction de la configuration du local à équiper. La gorge g2 des ces deuxièmes profilés 22 débouche horizontalement à l'opposé de la paroi P1. Ainsi, on forme une fourrure permettant de raccorder une extrémité arrière 20a des dispositifs d'entretoisement 20. Il est bien compris que ce mode de fixation de l'extrémité arrière 20a des dispositifs d'entretoisement 20 est donnée à titre d'illustration et d'autres modes de fixation de ces dispositifs d'entretoisement 20 qui forment des appuis intermédiaires sont possibles, par exemple par un vissage directement sur la paroi P1 de support par des vis adaptées ou un collage avec une colle à base de plâtre.

Avant de commencer à poser les panneaux 3 de type PIV, on met en place une première série de dispositifs d'entretoisement 20 dans la fourrure horizontale installée sur la paroi P1, au niveau de la hauteur H. On assemble en premier lieu l'élément support 25 et la platine 27 associée avec l'élément d'entretoisement 20 comme cela est visible sur la figure 8A. Le réglage en profondeur de l'appui formé par le dispositif d'entretoisement 20 est obtenu grâce au vissage de l'élément de raccordement 40 amovible sur la tige d'entretoisement 35 et/ou par un clipsage plus ou moins accentué de l'élément support 25. Si cette dernière option est retenue, un dispositif de blocage de clipsage peut être utilisé pour éviter un déréglage ultérieur. Ce dispositif de blocage peut se présenter sous la forme d'une broche introduite dans la cavité 28a de l'élément support 25 visible sur la figure 11B.

L'élément étoilé 30 est ici placé entre l'élément support 25 et la tige d'entretoisement 35. Le raccordement aux premiers profilés 4 est réalisé par l'élément de raccordement 40 qui présente ici une symétrie de révolution autour de l'axe longitudinal X, ce qui facilite l'ajustement par vissage de la distance d'écartement entre l'élément étoilé 30 et le parement externe 8. Alternativement, la tige d'entretoisement 35 peut être omise et l'ajustement réalisé par un clipsage plus ou moins appuyé de l'élément de raccordement 40.

En référence à la figure 8A, une deuxième série de dispositifs d'entretoisement 20 est prévue, à un faible niveau de hauteur, pour le maintien des coins inférieurs de la rangée inférieure de panneaux 3. Ces dispositifs d'entretoisement 20 peuvent seulement être fixés, par une extrémité avant, aux premiers profilés 4. Les dispositifs d'entretoisement 20 de la première série et de la deuxième série permettent de former une rangée de panneaux de PIV qui est parallèle à la paroi. A l'aide d'au moins une autre série de dispositifs d'entretoisement 20, une ou plusieurs rangées de panneaux 3 sont formées.

En référence aux figures 8A et 8B, les coins 3c des panneaux 3 de type PIV sont chacun insérés entre deux branches adjacentes d'un élément étoilé 30 et l'assemblage des panneaux 3 à l'aide des dispositifs d'entretoisement 20 permet de former une couche de panneaux 3 à une distance intermédiaire entre la paroi P1 du bâtiment et les premiers profilés 4.

Chacun des coins 3c des panneaux 3 est maintenu par un rapprochement des platines 27, 37 ou moyens de maintien analogues répartis de part et d'autre des branches 33a, 33b, 33c, 33d de l'élément étoilé. Par exemple, la platine 37 associée à la tige d'entretoisement 35 comme montré sur la figure 13A peut être clipsée sur l'extrémité avant 32a de la portion centrale 32, avant ou pendant la pose des panneaux 3 de type PIV.

On comprend que les opérations de montage d'un premier profilé 4, de mise en place du dispositif d'entretoisement 20 avec réglage en profondeur de l'élément étoilé (typiquement par un clipsage plus ou moins accentué de l'élément support 25 et de la platine 37 associée) et de pose d'un panneau 3 de type PIV peuvent être répétées, par exemple tous les 600 mm lorsque la largeur du panneau 3 est de 600 mm. Cet entraxe permet une liberté de mouvement satisfaisante pour l'opérateur et par exemple compris plus généralement entre 300 et 1200 mm. La hauteur des panneaux 3 de type PIV est par exemple comprise entre 500 et 2000 mm et de préférence de l'ordre de 1200 mm. Mais bien entendu d'autres dimensions peuvent être utilisées.

Ce type d'assemblage permet de rendre solidaire des profilés métalliques des dispositifs d'entretoisement 20 non métalliques, qui préservent l'intégrité des panneaux 3 de type PIV. Les zones de jonction entre les bords verticaux et entre les bords horizontaux des panneaux 3 sont recouvertes à l'aide d'une bande adhésive spécifique 70 (ou autre élément d'étanchéité similaire), non agressive pour l'enveloppe 3b des panneaux 3. Ceci permet de rendre étanche à l'air la couche de panneaux 3 de type PIV. Des lames d'air (sans possibilité de circulation entre elle) sont alors formées de part et d'autre de la couche de panneaux 3.

Toujours en référence aux figures 8A et 8B, l'ossature 2 pourvue des dispositifs d'entretoisement 20 rigidifie mécaniquement la contre-cloison. Bien entendu, les dispositifs d'entretoisement 20 peuvent présenter un nombre de pièces différent et les moyens structurels 4, 5', 22 utilisés pour supporter ces dispositifs d'entretoisement 20 peuvent se présenter sous d'autres formes qui permettent de définir deux extrémités de fixation à distance de la couche de panneaux 3.

Le traitement en haut et en bas du système d'isolation thermique 1 se fait soit avec des panneaux 3 PIV de dimension spécifique, soit plus simplement avec un panneau 23 de polyuréthane ou une mousse rigide performante thermiquement comme cela est visible en bas de la figure 8A. Ici aussi, l'étanchéité à l'air, en particulier autour de l'ouvrage, est assurée par quelque moyen que ce soit (bande adhésive, mousse à expansion, projection de plâtre spécifique). Pour rapprocher au maximum du plancher 7 les dispositifs d'entretoisement, il peut être avantageux d'utiliser des éléments étoilés 30 à seulement trois branches (agencées en T inversé) pour soutenir la partie inférieure des panneaux 3 de la rangée la plus basse. Ceci est également applicable pour les dispositifs d'entretoisement 20 qui sont adjacents au plafond (avec les trois branches agencées en T). Les autres dispositifs d'entretoisement 20 comportent de préférence quatre branches 33a, 33b, 33c, 33d comme illustré sur la figure 14. Il peut aussi être intéressant d'utiliser, dans une variante de réalisation, une pluralité d'éléments étoilés 30 du même genre à quatre branches 33a, 33b, 33c, 33d, et dont l'une des branches 33a, 33b, 33c, 33d est de type sécable ou peut être retirée par un outil de coupe conventionnel.

Pour couvrir les angles, il est préférable que les panneaux 3 de type PIV soient supportés par des moyens structurels qui se présentent sous la forme du système de jonction 45 représenté sur la figure 10 plutôt que d'utiliser des profilés. Dans ce cas, la largeur d'au moins un des panneaux 3 qui se rejoignent à l'angle peut être le cas échéant réduite, par exemple de l'ordre de 300 mm contre 600 mm pour les panneaux 3 distants de l'angle.

En référence à la figure 10, le plateau 55 support de panneaux 3 du système de jonction 45 en équerre est installé au même niveau que les éléments étoilés 30 qui supportent les panneaux 3 à distance de l'angle. Un ruban adhésif permet de maintenir la jonction entre les deux panneaux 3 qui se croisent dans l'angle. Ce ruban ou bande analogue assure l'étanchéité à l'air. Ainsi, la couche de panneaux 3 de type PIV peut présenter, entre chaque paire de panneaux 3 adjacents, des éléments d'étanchéité formant barrière à une circulation d'air au travers de la couche.

Pour finir, il reste à fixer le parement externe 8, constitué typiquement d'au moins une plaque, parallèlement et à distance de la couche de panneaux 3, de préférence directement sur les premiers profilés 4 par un mode de fixation connu en soi.

En référence à la figure 8A, on peut voir qu'un système protecteur 60 de la couche de panneaux 3 peut être optionnellement placé entre le parement 8 et les panneaux 3. Ce système protecteur 60 peut être installé avant la fixation du parement externe 8 et permet d'empêcher le percement des surfaces de l'enveloppe 3b des panneaux 3 de type PIV par un organe de fixation ou de vissage ou autre organe analogue dont la longueur serait supérieure à l'espace libre E formée entre le parement externe 8 et la face avant F1 de la couche de panneaux 3. Le système protecteur 60 comprend ici une couche de matériau, de préférence à base de fibres, qui s'étend dans l'espace libre E et est adaptée pour prévenir une perforation de la couche de panneaux 3. Lorsqu'un organe traverse le parement externe 8, la couche de matériau fibreux du système protecteur 60 qui forme par exemple une face avant 60a du système protecteur 60 (en vis-à-vis du parement externe 8) permet d'arrêter la partie perforante de l'organe traversant le parement 8 avant la surface des panneaux 3 de type PIV. Un matériau rigide sous forme de plaque ou de dalle peut aussi être utilisé en remplacement ou en complément de la couche de matériau fibreux afin d'éviter un endommagement de l'enveloppe d'un panneau 3. De préférence l'épaisseur du système protecteur 60 est inférieure à l'épaisseur d3 des panneaux 3, par exemple en étant au moins deux fois inférieure.

La fixation du système protecteur 60 permet de positionner la couche de matériau anti perforation plus près du parement externe 8 que de la couche de panneaux 3 de type PIV. On comprend qu'un tel système protecteur 60 peut être fixé de façon connue en soi aux premiers profilés qui soutiennent le parement externe et/ou aux dispositifs d'entretoisement ou au parement externe 8 lui-même. Compte tenu de la présence des dispositifs d'entretoisement 20, le système protecteur 60 peut se décomposer en plusieurs portions. Bien entendu un tel système protecteur 60 peut être utilisé avec n'importe quelle variante de système d'isolation thermique 1. Par exemple, le système protecteur 60 peut être attaché derrière le parement externe 8 dans l'exemple de réalisation des figures 1 et 2, par exemple en étant fixé aux éléments d'écartement du système d'isolation thermique 1.

Par ailleurs, il sera compris que l'ossature 2 peut présenter à la fois des profilés 10, 10', 11 et 12 et des dispositifs d'entretoisement 20, ces éléments de jonction entre les panneaux 3 étant compatibles. Dans ce cas le réglage en profondeur des dispositifs d'entretoisement 20 doit simplement coïncider avec la position prise par les profilés 11 et/ou 12 qui ont été fixés indirectement sur un substrat du bâtiment, de sorte que la couche de panneaux 3 puisse s'étendre bien verticalement, à une distance d1 (pour l'espace E) du parement externe 8 et avec un écartement e (pour l'espace G) par rapport à la paroi P1 de support. Dans une variante l'un au moins des profilés 11 et 12 peut être supprimé et le parement externe 8 est supporté essentiellement par les dispositifs d'entretoisement 20. Par ailleurs on comprend que l'extrémité 20a des dispositifs d'entretoisement 20 peut être réalisée différemment et/ou non raccordée directement à la paroi P1. Par ailleurs, tout ou partie des dispositifs d'entretoisement 20 peut seulement servir à réaliser l'écartement entre la couche de panneaux 3 et le parement externe, l'extrémité 20a et la partie traversant la couche de panneaux 3 étant dans ce cas supprimées et un raccord fixe (par exemple par collage, clipsage ou autre) pouvant être prévu entre une extrémité du dispositif d'entretoisement 20 ainsi raccourci et les profilés 10, 10'.

Un des atouts du système d'isolation thermique 1 est de minimiser le temps de montage grâce à l'utilisation d'une ossature 2 qui facilite la pose des panneaux 3 de type PIV tout en évitant de mettre en contact l'enveloppe 3b de ces panneaux 3 avec des surfaces pouvant détériorer les performances de ces panneaux 3.

Il doit être évident pour les personnes versées dans l'art que la présente invention permet des modes de réalisation sous de nombreuses autres formes spécifiques sans l'éloigner du domaine d'application de l'invention comme revendiqué.

## Revendications

1. Système d'isolation thermique (1) destinée à recouvrir une paroi (P1) d'un bâtiment, comportant :
- des panneaux isolants (3) ayant chacun une forme de plaque avec des coins (3c), chacun des panneaux comprenant un matériau poreux (3a) résistant à la compression et une enveloppe barrière (3b) étanche aux gaz permettant de maintenir un vide intérieur et qui renferme le matériau poreux, les panneaux étant répartis en au moins une couche de panneaux avec des rangées de panneaux ;
- un parement externe (8) ;
- une ossature (2) pour fixer les panneaux (3) dans ladite couche, de sorte que ladite couche présente une face dite avant (F1) du côté du parement externe (8) et une face dite arrière (F2) opposée à la face avant ;
l'ossature (2) comprenant : des moyens structurels rigides (4, 5') agencés entre le parement externe (8) et ladite face avant (F1) et adaptés pour s'appuyer sur au moins un substrat (7) du bâtiment ;
- des dispositifs d'entretoisement (20) qui sont, tous ou pour une partie, supportés par les moyens structurels (4, 5'), et chacun comprenant un élément support (25) agencé à une première extrémité axiale (20a) du dispositif d'entretoisement (20) et destiné à être fixé directement ou indirectement à la paroi (P1) ;
**caractérisé en ce que** les dispositifs d'entretoisement (20) forment des appuis intermédiaires pour le maintien de la couche de panneaux (3) et adaptés pour maintenir un écartement (d1) entre le parement externe (8) et ladite face avant (F1), les dispositifs d'entretoisement (20) qui sont de préférence non métalliques comprenant chacun :
- un élément étoilé (30) comportant une portion centrale (32) qui définit un axe longitudinal (X) du dispositif d'entretoisement (20) et des branches (33a, 33b, 33c, 33d) adaptées pour venir en contact avec des tranches (T) de panneaux (3) adjacents dans la couche, les branches de l'élément étoilé (30) s'étendant de façon radiale autour de la portion centrale (32) ; et
- des moyens (27, 37) de maintien des coins (3c) des panneaux (3) répartis de part et d'autre des branches (33a, 33b, 33c, 33d) de l'élément étoilé (30)

2. Système d'isolation thermique selon la revendication 1, dans lequel l'élément étoilé (30) comprend quatre branches (33a, 33b, 33c, 33d) agencées pour former quatre angles de 90° autour de l'axe longitudinal (X), les panneaux (3) ayant une forme rectangulaire avec quatre tranches (T) et quatre coins (3c), les moyens de maintien des coins des panneaux comprenant deux platines (27, 37) en vis-à-vis, chacune des platines s'étendant de façon annulaire autour de la portion centrale (32) de l'élément étoilé (30).

3. Système d'isolation thermique selon la revendication 2, dans lequel les deux platines (27, 37) présentent chacune une face intérieure (27a, 37a) qui présente au moins quatre organes saillants (27b, 37b) élastiquement déformables répartis dans quatre zones angulaires complémentaires de ladite face intérieure (27a, 37a) et adaptés chacun pour venir en appui sur une face opposée d'un des panneaux (3), les organes saillants (27b, 37b) présentant une surface plane ou convexe pour le contact avec les panneaux.

4. Système d'isolation thermique selon l'une quelconque des revendications précédentes, dans lequel les dispositifs d'entretoisement (20) comprennent chacun un élément de raccordement (40) agencé à une deuxième extrémité (20b) axiale du dispositif d'entretoisement opposée à la première extrémité axiale (20a), l'élément de raccordement (40) étant fixé sur au moins un élément d'appui (4) des moyens structurels (4, 5').

5. Système d'isolation thermique selon la revendication 4, dans lequel les dispositifs d'entretoisement (20) comprennent chacun une tige d'entretoisement (35) fixée à l'élément étoilé (30) et qui s'étend dans le prolongement de la portion centrale (32) de l'élément étoilé, l'élément de raccordement (40) se fixant à la tige d'entretoisement (35).

6. Système d'isolation thermique selon l'une quelconque des revendications précédentes, comprenant une pluralité de profilés (4, 22) qui s'étendent de préférence parallèlement ou perpendiculairement aux rangées, lesdits moyens structurels (4, 5') comprenant des premiers profilés (4) de ladite pluralité qui présentent chacun une section en U en coupe transversale.

7. Système d'isolation thermique selon la revendication 6, dans lequel l'élément de raccordement (40) est de type réglable et comprend :
- un filetage interne qui coopère avec un filetage externe (35a) de la tige d'entretoisement (35) ; et
- au moins une structure d'accrochage sur deux retours parallèles (24a, 24b) des premiers profilés (4).

8. Système d'isolation thermique selon la revendication 6 ou 7, dans lequel les profilés (4, 22) de ladite pluralité comprennent des deuxièmes profilés (22) qui s'étendent perpendiculairement aux premiers profilés (4) et en vis-à-vis de la face arrière (F2) de la couche de panneaux (3), ledit élément support (25) des dispositifs d'entretoisement (20) étant fixé indirectement à la paroi (P1) par l'intermédiaire d'un des deuxièmes profilés (22).

9. Système d'isolation thermique selon l'une quelconque des revendications précédentes, dans lequel chacune des branches (33a, 33b, 33c, 33d) de l'élément étoilé (30) a une épaisseur comprise entre 0,5 et 5 mm, de préférence inférieure à 3 mm, la portion centrale 32 définissant entre deux branches opposées un écartement inférieur ou égal à 5 mm.

10. Système d'isolation thermique selon l'une quelconque des revendications précédentes, dans lequel le dispositif d'entretoisement (20) présente, au moins au niveau de l'élément étoilé (30), une conductivité thermique très inférieure à 0,6 W m⁻¹ K⁻¹, la couche de panneaux (3) présentant en outre entre chaque paire de panneaux (3) adjacents des éléments d'étanchéité (70) formant barrière à une circulation d'air au travers de ladite couche.

11. Système selon l'une quelconque des revendications précédentes, comprenant une couche (60) de matériau protecteur, de préférence à base de fibres, qui s'étend du côté du parement externe (8) et est adaptée pour prévenir une perforation des panneaux (3).

12. Procédé d'assemblage d'un système d'isolation thermique (1) selon l'une des revendications précédentes recouvrant une paroi (P1) d'un bâtiment, dans lequel on fixe sur une ossature (2) une pluralité de panneaux isolants (3) ayant chacun une forme de plaque avec quatre côtés dont deux côtés opposés parallèles, chacun des panneaux de ladite pluralité comprenant un matériau poreux (3a) résistant à la compression et une enveloppe barrière (3b) étanche aux gaz permettant de maintenir un vide intérieur et qui renferme le matériau poreux, le procédé comprenant les étapes consistant essentiellement à :
- fixer des moyens structurels (4, 5') rigides en s'appuyant sur au moins un substrat (7) du bâtiment, à distance de la paroi (P1) ;
- fixer à la paroi, directement ou indirectement, une pluralité d'éléments de support (25) pour former des premières extrémités (20a) d'une même pluralité de dispositifs d'entretoisement (20) de préférence non métalliques ;
- assembler lesdits panneaux (3) de façon à former une couche de panneaux à une distance intermédiaire entre la paroi (P1) du bâtiment et les moyens structurels (4, 5'), en engageant des coins (3c) des panneaux (3) entre deux branches adjacentes d'un élément étoilé (30) qui fait partie des dispositifs d'entretoisement (20) ;
- maintenir des coins (3c) des panneaux (3) par un rapprochement de moyens de maintien (27, 37) répartis de part et d'autre des branches (33a, 33b, 33c, 33d) de l'élément étoilé (30) ;
- utiliser les moyens structurels (4, 5') pour supporter tous ou une partie des dispositifs d'entretoisement (20) à des deuxièmes extrémités (20b) opposées aux premières extrémités (20a) ; et
- fixer un parement externe (8) parallèlement et à distance de la couche de panneaux (3), de façon à définir un espace (E) entre le parement externe (8) et ladite couche de panneaux (3).

13. Procédé selon la revendication 12, dans lequel on fixe le parement externe (8) et des deuxièmes extrémités (20b) des dispositifs d'entretoisement (20) sur des profilés (4) de préférence métalliques.

## Patentansprüche

1. Wärmedämmungssystem (1), welches dazu bestimmt ist, eine Wand (P1) eines Gebäudes zu bedecken, umfassend:
- Dämmplatten (3), die jeweils eine Form einer Platte mit Ecken (3c) aufweisen, wobei jede der Platten ein poröses Material (3a), welches druckfest ist, und eine gasdichte Barrierehülle (3b), die es ermöglicht, ein inneres Vakuum aufrechtzuerhalten, und die das poröse Material einschließt, umfasst, wobei die Platten in wenigstens einer Schicht von Platten mit Reihen von Platten verteilt sind;
- eine Außenverkleidung (8);
- ein Skelett (2) zum Befestigen der Platten (3) in der Schicht, derart, dass die Schicht eine sogenannte Vorderseite (F1) auf der Seite der Außenverkleidung (8) und eine sogenannte Rückseite (F2), die der Vorderseite gegenüberliegt, aufweist;
wobei das Skelett (2) umfasst: starre Strukturmittel (4, 5'), die zwischen der Außenverkleidung (8) und der Vorderseite (F1) angeordnet sind und dafür eingerichtet sind, sich auf wenigstens einem Träger (7) des Gebäudes abzustützen;
- Abstandshaltevorrichtungen (20), welche alle oder zum Teil von den Strukturmitteln (4, 5') abgestützt werden und jeweils ein Stützelement (25) umfassen, das an einem ersten axialen Ende (20a) der Abstandshaltevorrichtung (20) angeordnet ist und dazu bestimmt ist, direkt oder indirekt an der Wand (P1) befestigt zu werden;
**dadurch gekennzeichnet, dass** die Abstandshaltevorrichtungen (20) Zwischenlager zum Halten der Schicht von Platten (3) bilden und dafür ausgelegt sind, einen Abstand (d1) zwischen der Außenverkleidung (8) und der Vorderseite (F1) aufrechtzuerhalten, wobei die Abstandshaltevorrichtungen (20), welche vorzugsweise nichtmetallisch sind, jeweils umfassen:
- ein sternförmiges Element (30), das einen mittleren Abschnitt (32), welcher eine Längsachse (X) der Abstandshaltevorrichtung (20) definiert, und Arme (33a, 33b, 33c, 33d), die dafür ausgelegt sind, mit Schmalseiten (T) benachbarter Platten (3) in der Schicht in Kontakt zu kommen, aufweist, wobei sich die Arme des sternförmigen Elements (30) radial um den mittleren Abschnitt (32) herum erstrecken; und
- Mittel (27, 37) zum Halten der Ecken (3c) der Platten (3), die beiderseits der Arme (33a, 33b, 33c, 33d) des sternförmigen Elements (30) angeordnet sind.

2. Wärmedämmungssystem nach Anspruch 1, wobei das sternförmige Element (30) vier Arme (33a, 33b, 33c, 33d) aufweist, die so angeordnet sind, dass sie vier Winkel von 90° um die Längsachse (X) bilden, wobei die Platten (3) eine rechteckige Form mit vier Schmalseiten (T) und vier Ecken (3c) aufweisen, wobei die Mittel zum Halten der Ecken der Platten zwei einander gegenüberliegende Plättchen (27, 37) umfassen, wobei sich jedes der Plättchen ringförmig um den mittleren Abschnitt (32) des sternförmigen Elements (30) erstreckt.

3. Wärmedämmungssystem nach Anspruch 2, wobei die zwei Plättchen (27, 37) jeweils eine Innenseite (27a, 37a) aufweisen, welche wenigstens vier elastisch verformbare vorspringende Elemente (27b, 37b) aufweist, die auf vier komplementäre Winkelbereiche der Innenseite (27a, 37a) verteilt sind und jeweils dafür ausgelegt sind, an einer gegenüberliegenden Seite einer der Platten (3) zur Anlage zu kommen, wobei die vorspringenden Elemente (27b, 37b) eine ebene oder konvexe Fläche für den Kontakt mit den Platten aufweisen.

4. Wärmedämmungssystem nach einem der vorhergehenden Ansprüche, wobei die Abstandshaltevorrichtungen (20) jeweils ein Anschlusselement (40) umfassen, das an einem dem ersten axialen Ende (20a) gegenüberliegenden zweiten axialen Ende (20b) der Abstandshaltevorrichtung angeordnet ist, wobei das Anschlusselement (40) an wenigstens einem Lagerelement (4) der Strukturmittel (4, 5') befestigt sind.

5. Wärmedämmungssystem nach Anspruch 4, wobei die Abstandshaltevorrichtungen (20) jeweils eine Abstandshaltestange (35) umfassen, die an dem sternförmigen Element (30) befestigt ist und die sich in der Verlängerung des mittleren Abschnitts (32) des sternförmigen Elements erstreckt, wobei das Anschlusselement (40) an der Abstandshaltestange (35) befestigt wird.

6. Wärmedämmungssystem nach einem der vorhergehenden Ansprüche, welches eine Vielzahl von Profilteilen (4, 22) umfasst, die sich vorzugsweise parallel oder senkrecht zu den Reihen erstrecken, wobei die Strukturmittel (4, 5') erste Profilteile (4) der Vielzahl umfassen, welche jeweils einen U-förmigen Querschnitt aufweisen.

7. Wärmedämmungssystem nach Anspruch 6, wobei das Anschlusselement (40) vom verstellbaren Typ ist und umfasst:
- ein Innengewinde, welches mit einem Außengewinde (35a) der Abstandshaltestange (35) zusammenwirkt; und
- wenigstens eine Struktur zur Aufhängung an zwei parallelen nach innen zurückgebogenen Enden (24a, 24b) der ersten Profilteile (4).

8. Wärmedämmungssystem nach Anspruch 6 oder 7, wobei die Profilteile (4, 22) der Vielzahl zweite Profilteile (22) umfassen, welche sich senkrecht zu den ersten Profilteilen (4) und gegenüber der Rückseite (F2) der Schicht von Platten (3) erstrecken, wobei das Stützelement (25) der Abstandshaltevorrichtungen (20) über eines der zweiten Profilteile (22) indirekt an der Wand (P1) befestigt ist.

9. Wärmedämmungssystem nach einem der vorhergehenden Ansprüche, wobei jeder der Arme (33a, 33b, 33c, 33d) des sternförmigen Elements (30) eine Dicke zwischen 0,5 und 5 mm, vorzugsweise von weniger als 3 mm, aufweist, wobei der mittlere Abschnitt (32) zwischen zwei einander gegenüberliegenden Armen einen Abstand definiert, der kleiner als oder gleich 5 mm ist.

10. Wärmedämmungssystem nach einem der vorhergehenden Ansprüche, wobei die Abstandshaltevorrichtung (20) an dem sternförmigen Element (30) eine spezifische Wärmeleitfähigkeit aufweist, die deutlich kleiner als 0,6 W m⁻¹ K⁻¹ ist, wobei die Schicht von Platten (3) außerdem zwischen jedem Paar benachbarter Platten (3) Dichtelemente (70) aufweist, die eine Zirkulation von Luft durch die Schicht hindurch verhindern.

11. System nach einem der vorhergehenden Ansprüche, welches eine Schicht (60) Schutzmaterial, vorzugsweise auf der Basis von Fasern, aufweist, welche sich auf der Seite der Außenverkleidung (8) erstreckt und dafür ausgelegt ist, eine Durchlöcherung der Platten (3) zu verhindern.

12. Verfahren zur Montage eines Wärmedämmungssystems (1) nach einem der vorhergehenden Ansprüche, welches eine Wand (P1) eines Gebäudes bedeckt, wobei an einem Skelett (2) eine Vielzahl von Dämmplatten (3) befestigt wird, die jeweils eine Form einer Platte mit vier Seiten, von denen zwei einander gegenüberliegende Seiten parallel sind, aufweisen, wobei jede der Platten der Vielzahl ein poröses Material (3a), welches druckfest ist, und eine gasdichte Barrierehülle (3b), die es ermöglicht, ein inneres Vakuum aufrechtzuerhalten, und die das poröse Material einschließt, umfasst, wobei das Verfahren die Schritte umfasst, die im Wesentlichen in Folgendem bestehen:
- Befestigen starrer Strukturmittel (4, 5') unter Abstützung auf wenigstens einem Träger (7) des Gebäudes in einem Abstand von der Wand (P1);
- Befestigen einer Vielzahl von Stützelementen (25) direkt oder indirekt an der Wand, um erste Enden (20a) einer gleichen Vielzahl von vorzugsweise nichtmetallischen Abstandshaltevorrichtungen (20) auszubilden;
- Montieren der Platten (3), um eine Schicht von Platten in einem Zwischenabstand zwischen der Wand (P1) des Gebäudes und den Strukturmitteln (4, 5') zu bilden, wobei Ecken (3c) der Platten (3) zwischen zwei benachbarte Arme eines sternförmigen Elements (30) eingesetzt werden, welches Bestandteil der Abstandshaltevorrichtungen (20) ist;
- Halten der Ecken (3c) der Platten (3) durch eine Annäherung von Haltemitteln (27, 37) aneinander, die beiderseits der Arme (33a, 33b, 33c, 33d) des sternförmigen Elements (30) angeordnet sind;
- Verwenden der Strukturmittel (4, 5'), um alle oder einen Teil der Abstandshaltevorrichtungen (20) an zweiten Enden (20b) abzustützen, die den ersten Enden (20a) gegenüberliegen; und
- Befestigen einer Außenverkleidung (8) parallel zu und in einem Abstand von der Schicht von Platten (3), um einen Zwischenraum (E) zwischen der Außenverkleidung (8) und der Schicht von Platten (3) zu definieren.

13. Verfahren nach Anspruch 12, wobei die Außenverkleidung (8) und zweite Enden (20b) der Abstandshaltevorrichtungen (20) an vorzugsweise metallischen Profilteilen (4) befestigt werden.

## Claims

1. Thermal insulation system (1) intended to cover a wall (P1) of a building, comprising:
- insulating panels (3) each being in the form of a plate with corners (3c), each of the panels comprising a porous compression-resistant material (3a) and a gastight barrier envelope (3b) for maintaining an internal vacuum that encloses the porous material, the panels being distributed in at least one layer of panels with rows of panels;
- an external facing (8);
- a framework (2) for fixing the panels (3) in said layer, so that said layer has a so-called front face (F1) on the same side as the external facing (8) and a so-called rear face (F2) opposite to the front face;
the framework (2) comprising: rigid structural means (4, 5') arranged between the external face (8) and said front face (F1) and suitable for bearing on at least one substrate (7) of the building;
- bracing devices (20) that are, all or partly, supported by the structural means (4, 5'), and each comprising a support element (25) arranged at a first axial end (20a) of the bracing device (20) and intended to be fixed directly or indirectly to the wall (P1);
**characterised in that** the bracing devices (20) form intermediate supports for holding the layer of panels (3) and suitable for maintaining a separation (d1) between the external facing (8) and said front face (F1), the bracing devices (20), which are preferably non-metallic, each comprising:
- a star-shaped element (30) comprising a central portion (32) that defines a longitudinal axis (X) of the bracing device (20) and branches (33a, 33b, 33c, 33d) suitable for coming into contact with edges (T) of adjacent panels (3) in the layer, the branches of the star-shaped element (30) extending radially around the central portion (32); and
- means (27, 37) for holding corners (3c) of the panels (3) distributed on either side of the branches (33a, 33b, 33c, 33d) of the star-shaped element (30).

2. Thermal insulation system according to claim 1, in which the star-shaped element (30) comprises four branches (33a, 33b, 33c, 33d) arranged so as to from four angles of 90° around the longitudinal axis (X), the panels (3) having a rectangular shape with four edges (T) and four corners (3c), the means for holding the corners of the panels comprising two facing bearing plates (27, 37), each of the bearing plates extending annularly around the central portion (32) of the star-shaped element (30).

3. Thermal insulation system according to claim 2, in which the two bearing plates (27, 37) each have an interior face (27a, 37a) that has at least four elastically deformable projecting members (27b, 37b) distributed in four complementary angular zones of said interior face (27a, 37a) and each suitable for coming into abutment on an opposite face of one of the panels (3), the projecting members (27b, 37b) having a planar or convex surface for contact with the panels.

4. Thermal insulation system according to any of the preceding claims, in which the bracing devices (20) each comprise a connection element (40) arranged at a second axial end (20b) of the bracing device opposite to the first axial end (20a), the connection element (40) being fixed to at least one support element (4) of the structural means (4, 5').

5. Thermal insulation system according to claim 4, in which the bracing devices (20) each comprise a bracing rod (35) fixed to the star-shaped element (30) and which extends in line with the central portion (32) of the star-shaped element, the connection element (40) being able to be fixed to the bracing rod (35).

6. Thermal insulation system according to any of the preceding claims, comprising a plurality of profiled members (4, 22) that preferably extend parallel or perpendicular to the rows, said structural means (4, 5') comprising first profiled members (4) in said plurality that each have a U-shaped section in cross section.

7. Thermal insulation system according to claim 6, in which the connection element (40) is of the adjustable type and comprises:
- an internal thread that cooperates with an external thread (35a) on the bracing rod (35); and
- at least one structure for attachment on two parallel returns (24a, 24b) of the first profiled members (4).

8. Thermal insulation system according to claim 6 or claim 7, in which the profiled members (4, 22) in said plurality comprise second profiled members (22) that extend perpendicular to the first profiled members (4) and facing the rear face (F2) of the layer of panels (3), said support element (25) of the bracing device (20) being fixed indirectly to the wall (P1) by means of one of the second profiled members (22).

9. Thermal insulation system according to any of the preceding claims, in which each of the branches (33a, 33b, 33c, 33d) of the star-shaped element (30) has a thickness of between 0.5 and 5 mm, preferably less than 3 mm, the central portion 32 defining, between two opposite branches, a separation of less than or equal to 5 mm.

10. Thermal insulation system according to any of the preceding claims, in which the bracing device (20) has, at least at the star-shaped element (30), a thermal conductivity of very much less than 0.6 W m⁻¹ K⁻¹, the layer of panels (3) further having, between each pair of adjacent panels (3), sealing elements (70) forming a barrier to a circulation of air through said layer.

11. System according to any of the preceding claims, comprising a layer (60) of protective material, preferably based on fibres, which extends on the same side as the external facing (8) and is suitable for preventing perforation of the panels (3).

12. Method for assembling a thermal insulation system (1) according to any of the preceding claims, covering a wall (P1) of a building, in which a plurality of insulating panels (3) each being in the form of a plate with four sides, with two opposite sides parallel, are fixed to a framework (2), each of the panels in said plurality comprising a compression-resistant porous material (3a) and a gastight barrier envelope (3b) for maintaining an internal vacuum and which encloses the porous material, the method comprising the steps consisting essentially of:
- fixing rigid structural means (4, 5') bearing on at least one substrate (7) of the building, at a distance from the wall (PI);
- fixing to the wall, directly or indirectly, a plurality of support elements (25) in order to form first ends (20a) of the same plurality of bracing devices (20), preferably non-metallic;
- assembling said panels (3) so as to form a layer of panels at an intermediate distance between the wall (P1) of the building and the structural means (4, 5'), engaging corners (3c) of the panels (3) between two adjacent branches of a star-shaped element (30) that forms part of the bracing devices (20);
- holding corners (3c) of the panels (3) by bringing together holding means (27, 37) distributed on either side of the branches (33a, 33b, 33c, 33d) of the star-shaped element (30);
- using the structural means (4, 5') to support all or some of the bracing devices (20) at second ends (20b) opposite to the first ends (20a); and
- fixing an external facing (8) parallel to and at a distance from the layer of panels (3), so as to define a space (E) between the external facing (8) and said layer of panels (3).

13. Method according to claim 12, in which the external facing (8) and second ends (20b) of the bracing devices (20) are fixed to profiled members (4), preferably metallic.
